(19) 

Europäisches
Patentamt
European
Patent Office
Office européen
des brevets

(11) **EP 2 535 852 A1**

(12) **EUROPEAN PATENT APPLICATION**

(43) Date of publication:
**19.12.2012 Bulletin 2012/51**

(21) Application number: **12004414.4**

(22) Date of filing: **12.06.2012**

(51) Int Cl.:
***G06Q 10/00*** *(2012.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.06.2011 US 201113163549**

(71) Applicant: **SAP AG
69190 Walldorf (DE)**

(72) Inventor: **Allgaier, Matthias
69190 Walldorf (DE)**

(74) Representative: **Müller-Boré & Partner
Patentanwälte
Grafinger Straße 2
81671 München (DE)**

(54) **Case-based retrieval framework**

(57)     In one embodiment, a method includes storing a set of integration cases previously used for adapting a standard enterprise system. The integration cases include a problem description and a problem solution for the adapting of the standard enterprise system. The method receives an integration problem for extending the standard enterprise system. The integration problem has a problem description and not a problem solution. A similarity between the problem description of the integration problem and the problem description of the set of integration cases is determined and one or more similar integration cases from the set of integration cases to the integration problem is determined based on the determined similarity. The method then outputs the one or more similar integrations cases to a user. The problem solution for a similar integration case is usable to determine the problem solution for the integration problem.

| Rank | Integration Case | | | Similarity |
|---|---|---|---|---|
| 1 | Case 24 | Problem 24 | Solution 24 | 73 % |
| 2 | Case 13 | Problem 13 | Solution 13 | 65 % |
| … | … | | | … |

Fig. 1

**Description**

BACKGROUND

Particular embodiments generally relate to enterprise systems.

Despite the advances in Service-Oriented Architectures (SOA), the integration of complementary services into standard enterprise systems requires deep expert knowledge. Typically the integration of services, provided by partners or independent software vendors, is carried out in time- and cost intensive integration projects.

In most cases, extension or adaptation of a core enterprise system itself is required. In order to extend or adapt standard enterprise systems a very high level of business domain knowledge as well as technical expert knowledge are required. Therefore services are typically integrated by highly specialized expert consultants (system or service integrators).

System integrators typically start from scratch while integrating services into standard enterprise systems. Given a new integration problem system integrators implicitly and manually search for similar problems they solved in the past, e.g. by searching in code fragments or documentations of already solved integration solutions. This implies a high degree of manual work and therefore leads to high integration costs.

SUMMARY

In one embodiment, a method includes storing a set of integration cases previously used for adapting a standard enterprise system. The integration cases include a problem description and a problem solution for the adapting of the standard enterprise system. The method receives an integration problem for extending the standard enterprise system. The integration problem has a problem description and not a problem solution. A similarity between the problem description of the integration problem and the problem description of the set of integration cases is determined and one or more similar integration cases from the set of integration cases to the integration problem is determined based on the determined similarity. The method then outputs the one or more similar integrations cases to a user. The problem solution for a similar integration case is usable to determine the problem solution for the integration problem.

In one embodiment, the problem description for the integration problem comprises a first set of attributes, the problem descriptions for the set of integration cases comprise a second set of attributes, and the similarity is determined between the first set of attributes and each of the second set of attributes.

In one embodiment, determining the similarity includes computing local similarity measures for an integration goal description, an integration context description, and an integration requirements description.

In one embodiment, the method includes outputting a questionnaire; receiving answers to questions for the integration problem on the questionnaire; and generating the problem description for the integration problem from the answers.

In another embodiment, a non-transitory computer-readable storage medium contains instructions for controlling a computer system to be operable to: store a set of integration cases previously used for adapting a standard enterprise system, wherein integration cases include a problem description and a problem solution for the adapting of the standard enterprise system; receive an integration problem for extending the standard enterprise system, the integration problem having a problem description and not a problem solution; determine a similarity between the problem description of the integration problem and the problem description of the set of integration cases; determine one or more similar integration cases from the set of integration cases is usable to determine the problem solution for the integration problem.

In one embodiment, an apparatus includes one or more computer processors and a computer-readable storage medium including instructions for controlling the one or more computer processors to be operable to: store a set of integration cases previously used for adapting a standard enterprise system, wherein integration cases include a problem description and a problem solution for the adapting of the standard enterprise system; receive an integration problem for extending the standard enterprise system, the integration problem having a problem description and not a problem solution; determine a similarity between the problem description of the integration problem and the problem description of the set of integration cases; determine one or more similar integration cases from the set of integration cases to the integration problem based on the determined similarity; and output the one or more similar integrations cases to a user, wherein the problem solution for a similar integration case is usable to determine the problem solution for the integration problem.

The following detailed description and accompanying drawings provide a better understanding of the nature and advantages of the present invention.

BRIEF DESCRIPTION OF THE DRAWINGS

Fig. 1 depicts a system for providing definition and retrieval of integration cases according to one embodiment.

Fig. 2 depicts a case-based reasoning cycle for service integration according to one embodiment.

Fig. 3 shows a more detailed example of case-based recommender system according to one embodiment.

Fig. 4 shows different categories included in an integration case according to one embodiment.

Fig. 5 shows an example of a similarity assessment according to one embodiment.

Fig. 6a shows an example of integration goal similarity measure according to one embodiment.

Fig. 6b shows an integration context similarity measure according to one embodiment.

Fig. 6c shows an example of integration requirements similarity measure according to one embodiment.

Fig. 6d depicts the global integration case similarity measure according to one embodiment.

Fig. 7 depicts a simplified flowchart for performing case-based retrieval according to one embodiment.

Fig. 8a shows an interface used by the service integrator to define the integration goal attributes according to one embodiment.

Fig. 8b shows an interface used by the service integrator to input the integration context definition according to one embodiment.

Figs. 8c and 8d depict interfaces that allow the service integrator to input information for the integration requirements attributes according to one embodiment.

Fig. 8e shows an interface that allows the service integrator to input similarity measures to be used with different attributes according to one embodiment.

Fig. 8f shows an example of retrieved results according to one embodiment.

Fig. 9 shows a more detailed example of an enterprise system according to one embodiment.

Fig. 10 shows an example of an interface of a business application according to one embodiment.

Fig. 11 illustrates hardware of a special purpose computing machine configured with a case-based retrieval framework according to one embodiment.

DETAILED DESCRIPTION

Described herein are techniques for a case-based retrieval framework. In the following description, for purposes of explanation, numerous examples and specific details are set forth in order to provide a thorough understanding of embodiments of the present invention. Particular embodiments as defined by the claims may include some or all of the features in these examples alone or in combination with other features described below, and may further include modifications and equivalents of the features and concepts described herein.

System Overview

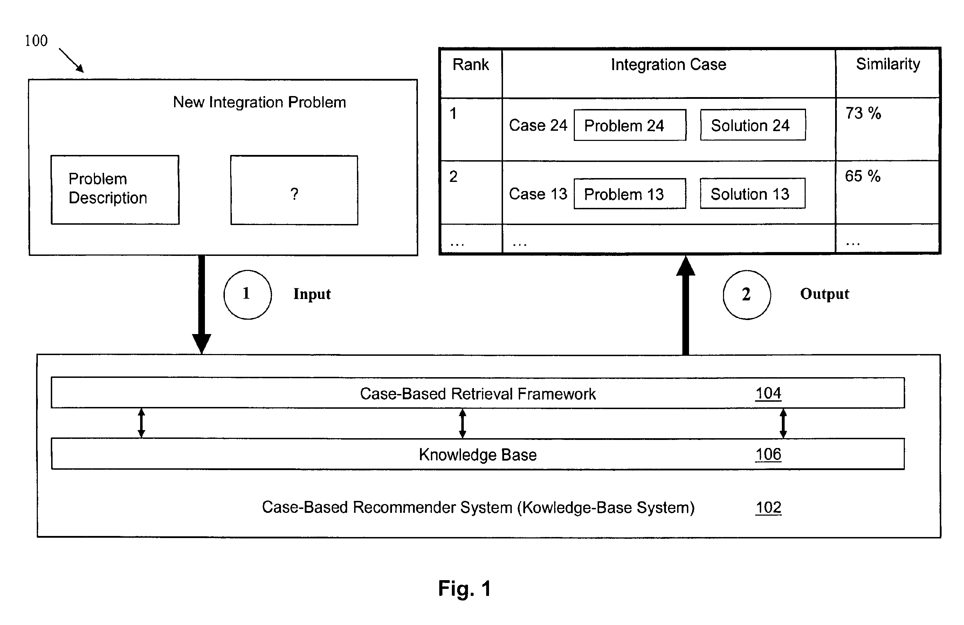

Fig. 1 depicts a system 100 for providing definition and retrieval of integration cases according to one embodiment. A case-based recommender system 102, which includes a case-based retrieval framework 104 and a knowledge base 106. Case-based retrieval framework 104 provides a platform with a knowledge base of already solved integration cases that can be leveraged for adapting a present problem. An integration case is a description of a previous adaptation of the enterprise system that was performed. Case-based retrieval framework 104 retrieves integration cases that are similar to the present problem to allow a service integrator to adapt a problem solution of the already solved integration case as a solution for the present problem. The adaptation of the problem solution allows re-use of previous knowledge to adapt the enterprise system.

In one example, the service integrator inputs a new integration problem that includes a problem description into case-based retrieval framework 104. The integration problem may be considered an integration case also. However, the term integration problem is used for discussion purposes and is an integration cases that does not include a solution. Case-based retrieval framework 104 searches knowledge base 106 to determine integration cases that have been previously solved. Case-based retrieval framework 104 outputs the integration cases based on the similarity to the new integration problem. The service integrator may then use the integration cases, which include a problem description and problem solution to determine the solution for the new integration problem.

In one embodiment, case-based retrieval framework 104 is used when an extension to a standard enterprise system is being performed. A standard enterprise system may be a standard software system, such as an enterprise resource planning (ERP), customer relationship management (CRM), supply chain management (SCM), or supplier relationship management (SRM) system. The standard enterprise system may be sent to a variety of companies. Each company may want to adapt or extend the standard enterprise system. For example, certain customizations may be performed, such as by adding new service integrator interface (UI) elements to core UI components, adding new process steps to core process models or even extending business objects with additional fields.

In one embodiment, the system integrator may want to integrate a complementary service into the standard enterprise system. The integration problem may be described based on different categories that define the problem, such as the categories of an integration goal, an integration context, and integration requirements. Based on the problem description, case-based retrieval framework 104 searches knowledge base 106 for similar integration cases that have already been solved in the past using a case retrieval algorithm. A list of existing integration cases is generated and output to the system integrator. The list contains integration cases that are ranked according to their computed similarity to the integration problem currently. An integration case may be selected and adapted to the integration problem that is trying to be solved.

Case-based Reasoning Cycle

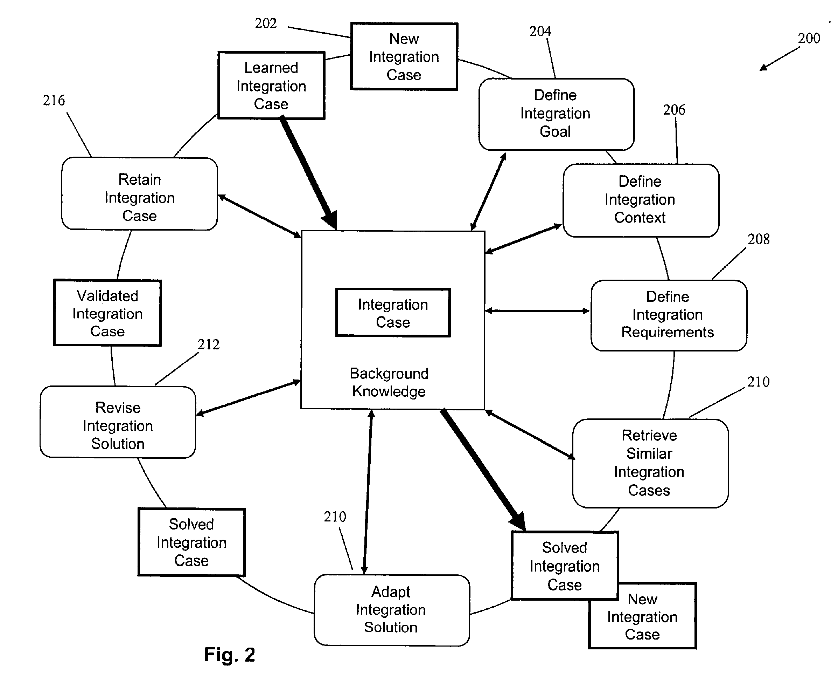

Particular embodiments use case-based reasoning for determining the integration cases. Fig. 2 depicts a case-based reasoning cycle 200 for service integration according to one embodiment. Particular embodiments focus on a define integration goal phase, a define integration context phase, a define integration requirements phase, and a retrieve similar integration cases phase. However, the entire cycle will be described.

At 202, a new integration case is initiated. At 204, an integration goal phase is performed. The integration goal defines the general goal that should be reached by the integration solution. For example, the goal may indicate what kind of target system should be extended, what kind of customizing/flexibility use case should be implemented, or what kind of integration flavor should be implemented (e.g., a service integrator interface or process extension). As will be described below, the integration goal may be defined using a wizard-based questionnaire.

At 206, a define integration context phase is performed. The integration context defines the functional area within the enterprise system where the service should be integrated. For example, the functional area may be core UI or process components that need to be extended to integrate the service. The context may be a service context and/or a target system context. The service context is associated with the provider of the service and describes the context of a service that may be integrated. For example, the service may be provided by an outside provider and/or the enterprise. The service context may define what service should be integrated or what are the business semantics of the service.

The target system context is a consumer context, that is, the context associated with the customized enterprise system. The target system context determines which functional area of the enterprise system the service should be integrated (business semantics) or what components in the enterprise system should be extended (e.g., UI and/or process components). The integration context may be defined using a wizard-based questionnaire as will be described below.

At 208, a define integration requirements phase is performed. The integration requirements may be grouped into different categories that may describe requirements for the integration solution. For example, the categories may be UI extension requirements, process extension requirements, business logic extension requirements, technical integration requirements, and non-functional integration requirements. These integration requirements may be defined using the wizard-based questionnaire and will be described in more detail below.

At 210, a retrieve similar integration cases phase is performed. In this phase, existing integration cases that have problem descriptions that are considered most similar to the problem description of the new integration problem are determined and output. The similarity is computed using a range of different similarity measures. The different types of similarity measures may depend on different attributes defined in the new integration problem. Customization of weights for the different similarity measures may be provided and are described below.

At 212, an adapt integration solution phase is performed. A similar integration case that is output may be selected and re-used as a template to be adapted with respect to the new integration problem. In one embodiment, a problem solution part of a similar case may be extracted and adapted to the new application context of the new integration problem to be solved. The integration solution may be modeled using adaptation patterns that may link patterns to extension points of service elements, add patterns, delete patterns, and replace patterns.

At 214, a revise integration solution phase is performed. In this phase, the adapted or solved new integration case is validated as to whether it meets the integration requirements. The criteria may include the correctness of the solution and quality of the solution.

At 216, a retain integration case phase is performed. After the solved new integration problem has been validated, an integration case with the problem description and the solution is stored in knowledge base 106. This case may be used in future cases to solve other integration problems. For example, case-based retrieval framework 104 may learn by the learning of a new experience (new integration case), learning of similarity knowledge (e.g. weights), or learning of adaptation knowledge.

Integration Case Description

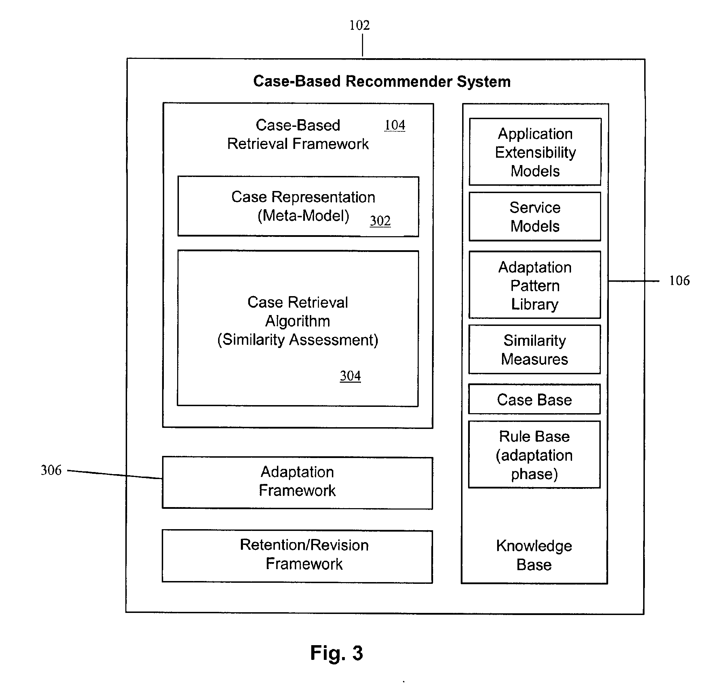

Fig. 3 shows a more detailed example of case-based recommender system 102 according to one embodiment. Case-based retrieval framework 104 includes a case representation meta-model 302 and a case retrieval algorithm 304. Knowledge base 106 also includes different information gleaned from previous integration cases, such as application extensibility models, service models, an adaptation pattern library, similarity measures, a case-base, and a rule base.

An adaptation framework 306 is used to adapt the similar integration cases.

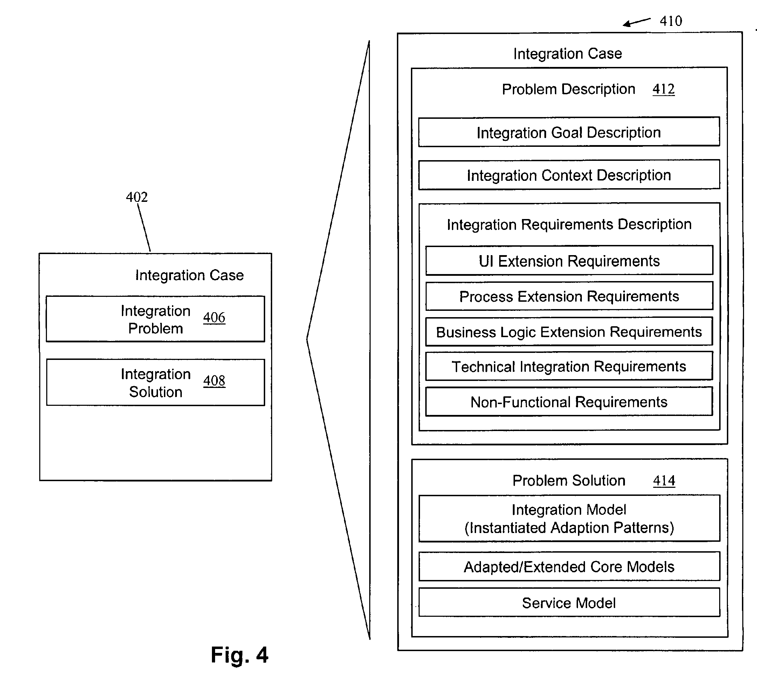

Case representation meta-model 302 provides metadata that describes categories for an integration case. For example, Fig. 4 shows different categories included in an integration case 402 according to one embodiment. Broadly, integration case 402 includes an integration problem 406 and an integration solution 408.

Integration problem 406 is a description of the problem for the integration case. For example, a description of the problem may be what extension needs to be performed on the standard enterprise system. Integration problem 406 covers all the information needed to decide if this case is applicable for a new integration problem (query case). In one embodiment, the content includes the goal to be achieved by the integration solution, the context of the problem situation, and requirements/constraints for the integration solution.

Integration solution 408 is the solution for the problem. The solution for the problem may be how to extend the standard enterprise system. Integration solution 408 includes information that describes a solution to the integration problem sufficiently. For example, the information includes the solution itself (e.g., integration models, substantiated adaptation patterns, extended core models, other documentation), possible alternative solutions, feedback/solution evaluation, and justification/explanations.

At 410, the specific categories for integration case 402 are shown. The meta-model includes a problem description 412 (corresponding to integration problem 406) and a problem solution 414 (corresponding to integration solution 408).

Problem description 412 includes different attributes that can be defined for the problem. Although the attributes included in problem description 412 are described, case-based retrieval framework 100 is designed in such a way that it is possible to flexibly add further attributes and similarity measures. The attributes outlined are just examples. The integration goal description includes attributes that may define the enterprise system that should be extended, define the customizing or flexibility use case that should be implemented, or define the principle integration flavor of the service in the target consumption environment of the enterprise system. Different attributes are described in Table 1 in Appendix A.

The integration context description describes the service that should be integrated into the enterprise system and defines the business semantics of the service to be integrated. Also, in an enterprise system context, the business semantics of the target components in the enterprise system that should be extended by the new service, the target UI components of the enterprise system that should be extended/adapted, and the target process components of the enterprise system that should be extended/adapted may be defined. Different attributes for the integration context specification are described in Table 2 of Appendix A.

The integration requirements specification includes different categories of UI extension requirements, process extension requirements, business logic extension requirements, technical integration requirements, and non-functional requirements. UI extension requirements define how an existing UI component of the standard enterprise system should be extended in order to integrate the complementary service (delivered by a third party provider, e.g. ISV). UI extension requirements are the requirements that define what is needed to extend the UI. UI extension requirements that define a textual description of the integration requirements, how the service should be triggered within a UI component, whether the UI component needs to be extended with additional UI controls, and whether the UI component needs to be extended with additional UI controls to gather information that is required to call the service or show/display result values of the service implication. Table 3 of Appendix A shows different attributes for the UI extension requirements specification.

Process extension requirements define how an existing process component of the standard enterprise system should be extended in order to integrate the complementary service (delivered by a third party provider, e.g. ISV). Process extension requirements may define the initiator of a process extension scenario, a position with respect to a process where the extension process should be plugged in, whether data should flow from a core process to an extension process, whether data should flow from the extension process to the core process, the communication mode between the core process and the extension process, whether multiple core processes are involved in the integration scenario, and whether multiple extension processes are involved in the integration scenario may be defined. Table 4 of Appendix A describes different attributes for process extension requirements.

Business logic extension requirements define how the existing business or application logic of the standard enterprise system should be extended in order to integrate the complementary service (delivered by a third party provider, e.g. ISV). Business logic extension requirements may define different attributes that may be associated with the business logic of an application. For example, the different attributes may define whether data returned from a service should be persistent in the enterprise system, whether the integration logic has to read data from the enterprise system, whether the integration logic has to write data into the enterprise system, whether the integration logic needs to access additional business logic on the enterprise system, whether an interactive service integrator task is required in the integration logic, whether a human service integrator task is required in the integration logic, whether a customizing parameter has to be set/adjusted in the enterprise system, and whether a new customizing parameter has to be added to the enterprise system. Table 5 of Appendix A describes attributes in the business logic extension requirements.

External service integration requirements describe requirements that are used to define how to integrate external services. The attributes define whether standard business-to-business (B2B) protocols should be used for the communication with the external service and which technical communication protocols should be used for the communication with the external service. Table 6 of Appendix A shows different attributes for the external service integration requirements.

Non-functional integration requirements define non-functional constraints that the extension logic defined by the service integrator should fulfill. Non-functional integration requirements define whether the integration logic needs to authenticate in the communication with the external service, whether the communication is performance-critical and if caching mechanisms are required, whether the communication with the external service should be logged, whether the messages sent to the service or received from the service should be encrypted, whether the messages sent to the service or received from the service should be digitally signed, and whether some specific transaction handling is required. Table 7 of Appendix A shows different attributes for non-functional integration requirements.

Case Retrieval

The first three phases of defining the integration goal, defining the integration context, and defining the integration requirements have now been described. The following will describe the retrieve similar integration cases phase. In one example, a case retrieval algorithm uses a similarity assessment based on a local-global principle. The local-global principle computes local similarity measures for attributes and then computes a global similarity measure using the local similarity measures. This process will be described in more detail below.

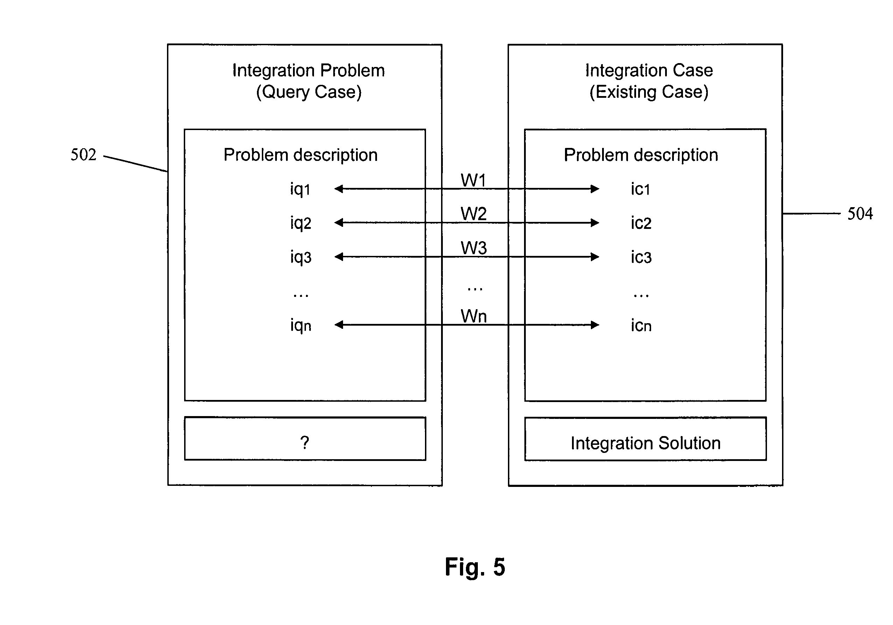

The similarity assessment computes the similarity between a new integration problem (e.g., query case) and an integration case (e.g., existing case) from knowledge base 106. Fig. 5 shows an example of a similarity assessment according to one embodiment. An integration problem 502 is input into case-based retrieval framework 104. The similarity assessment compares a number of integration cases with the integration problem. For discussion purposes, the integration case is shown as an integration case 504 for the comparison.

Integration problem 502 includes a problem description but no integration solution. Integration case 504 includes a problem description and also an integration solution. The integration problem for the query case includes a number of attributes iq1...iqn that describe the problem. Also, for the existing case, a number of attributes ic1-icn describe the problem for integration case 504. A similarity measure W1...Wn between similar attributes of the problem description is calculated.

Each attribute may be assigned an attribute type. In one embodiment, each attribute of the integration problem is compared to the respective attribute of the integration case retrieved from the knowledge base. The similarity function depends on the attribute type. For each attribute type it might be possible to configure multiple similarity functions. Attributes of different types may also be compared in other embodiments. A single attribute may be compared or a group of attributes may be compared together. For each attribute, a separate similarity function may be used. However, the same similarity function may be used multiple times in comparing different attributes types. First, a local similarity measure is performed on the respective attribute type. A global similarity measure may then be determined by combining the local similarity measures using an amalgamation function (e.g., a weighted average of the local similarity measures).

The following will describe the global similarity measure and then different examples for local similarity measures for the attributes of the problem description. The global similarity measure measures global similarity for the integration problem and an integration case. In one embodiment, the global similarity measure weights and aggregates the different local similarity measure results. Other global similarity measures may also be used. In one example, the global similarity measure may be defined by weighting local similarity measures for the attributes as defined by:

$$sim(iq, ic) = \frac{\sum_{i=1}^{n} w_i * sim_i(iq_i, ic_i)}{\sum_{i=1}^{n} w_i}$$

| Explanations | |
|---|---|
| $iq$ | Query case |
| $ic$ | Integration case |
| $iq_i$ | Attribute i of query case |
| $ic_i$ | Attribute i of integration case |

(continued)

| Explanations | |
|---|---|
| $sim_i(iq_i, ic_i)$ | Local similarity measure for case attribute i |
| $w_i$ | Weight of similarity measure for case attribute i |
| $\mathbb{N}$ | Number of case attributes |

The following will describe the various local similarity functions. The sample attributes that are described above with respect to Fig. 4 will be used; however, other attributes may also be appreciated and other local similarity measures may be used.

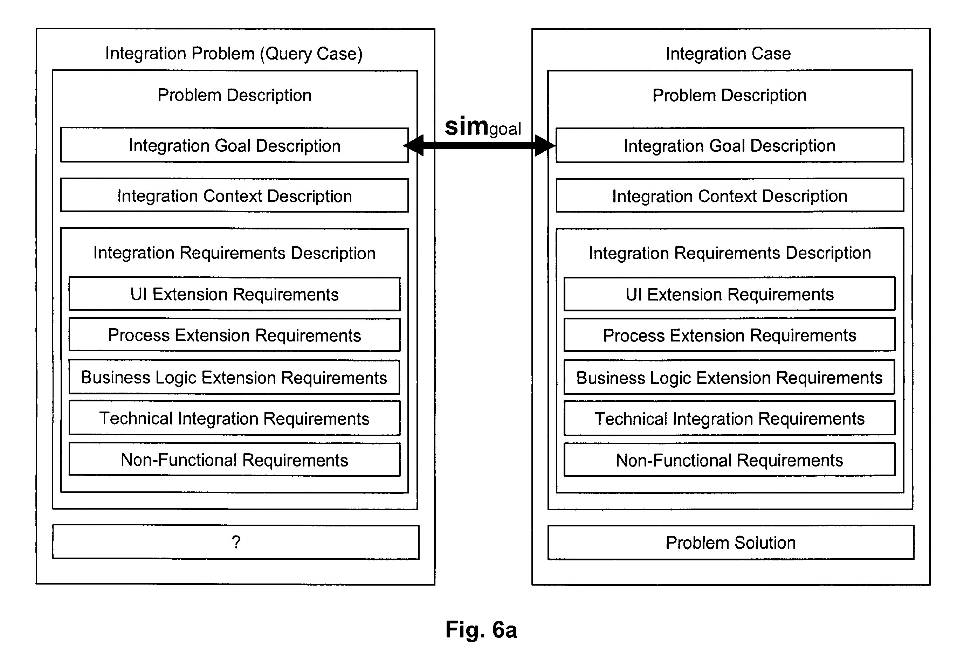

Fig. 6a shows an example of integration goal similarity measure according to one embodiment. The similarity measure $sim_{goal}$ is used to compare the attributes for the integration goal description in the integration problem and the integration case. The integration goal similarity measure may be the weighted average of the local similarity measures for the attributes "TargetBusinessSystemType", "UsageScenario", and "IntegrationFlavor". These attributes are described in Table 1 of Appendix A. Attributes described in Appendix A herein are examples and other attributes may be contemplated. The following equation may be used to determine the integration goal similarity measure:

$$sim_{goal}\left(iq_{goal}, ic_{goal}\right) =$$

$$\frac{w_{sys} * sim_{sys}\left(iq_{sys}, ic_{sys}\right) + w_{uc} * sim_{uc}(iq_{uc}, ic_{uc}) + w_{flavour} * sim(iq_{flavour}, ic_{flavour})}{w_{sys} + w_{uc} + w_{flavour}}$$

| Explanations | |
|---|---|
| $iq_{goal}$ | Goal specification part of the query case |
| $ic_{goal}$ | Goal specification part of the integration case |
| $sim_{sys}(iq_{sys}, ic_{sys})$ | Local similarity measure for the case attribute 'TargetBusinessSystemType' |
| $w_{sys}$ | Weight of similarity measure for the case attribute 'TargetBusinessSystemType' |
| $Sim_{uc}(iq_{uc}, ic_{uc})$ | Local similarity measure for the case attribute 'UsageScenario' |
| $w_{uc}$ | Weight of similarity measure for the case attribute 'UsageScenario' |
| $sim(iq_{flavour}, ic_{flavour})$ | Local similarity measure for the case attribute 'IntegrationFlavor' |
| $w_{flavour}$ | Weight of similarity measure for the case attribute 'IntegrationFlavor' |

The above measure computes the local similarity measures for the attributes above, weights them, and aggregates them.

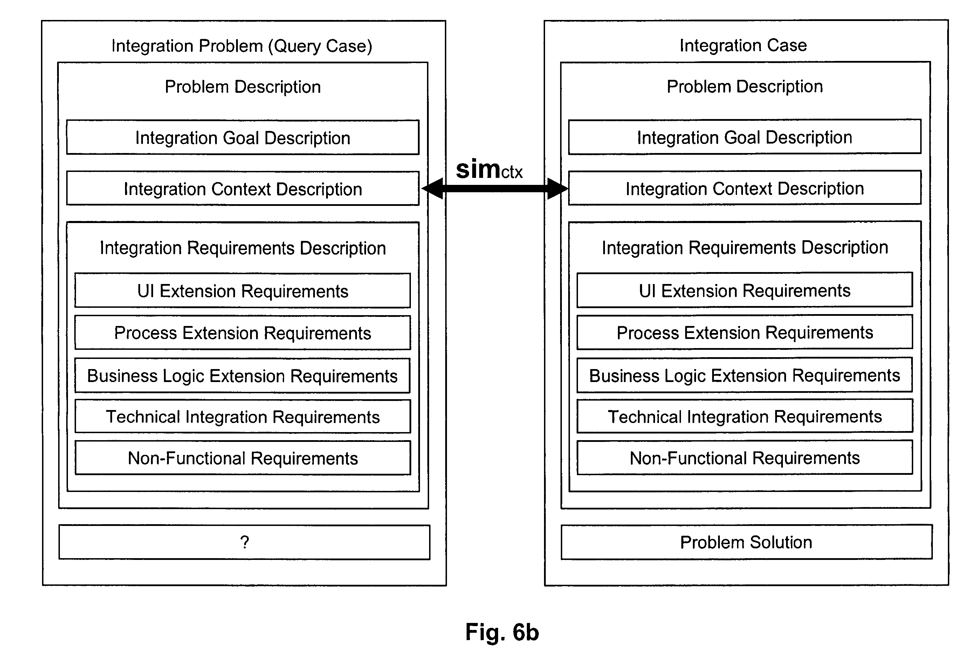

Fig. 6b shows an integration context similarity measure according to one embodiment. The integration context similarity measure $sim_{ctx}$ measures similarity for the attribute integration context description. The similarity measure $sim_{ctx}$ may be defined as the weighted average of the local similarity measures for the external service to be integrated and the core application components of the target system that have/had to be adapted. For example, the local attributes shown in Table 2 of Appendix A may be used. An equation for the integration context similarity may be:

$$sim_{ctx}(iq_{ctx}, ic_{ctx}) =$$

$$\frac{w_{service} * sim_{service}(iq_{service}, ic_{service}) + w_{core_{comp}} * sim_{core_{comp}}\left(iq_{core_{comp}}, ic_{core_{comp}}\right)}{w_{service} + w_{core_{comp}}}$$

| Explanations | |
|---|---|
| $iq_{ctx}$ | Context specification part of the query case |
| $ic_{ctx}$ | Context specification part of the integration case |
| $sim_{service}(iq_{service}, ic_{service})$ | Local similarity measure for the service to be integrated |
| $w_{service}$ | Weight of the similarity measure for the service to be integrated |
| $sim_{core_{comp}}, (iq_{core_{comp}}, ic_{core_{comp}})$ | Local similarity measure for the core application components that are extended/adapted |
| $w_{core_{comp}}$ | Weight of the similarity measure for the core application components to be extended/adapted |

The integration context similarity measure includes a service similarity measure and a core application component similarity measure. The service similarity measure $sim_{service}$ may be further defined as the weighted average of the local similarity measures for the business semantics and syntactical/technical characteristics of the services to be compared:

$$sim_{service}(iq_{service}, ic_{service}) =$$

$$\frac{w_{s_{sem}} * sim_{s_{sem}}\left(iq_{s_{sem}}, ic_{s_{sem}}\right) + w_{s_{syn}} * sim_{s_{syn}}\left(iq_{s_{syn}}, ic_{s_{syn}}\right)}{w_{s_{sem}} + w_{s_{syn}}}$$

| Explanations | |
|---|---|
| $iq_{service}$ | Query case attribute of the service to be integrated |
| $ic_{service}$ | Integration case attribute of the service to be integrated |
| $sim_{s_{sem}}(iq_{s_{sem}}, ic_{s_{sem}})$ | Local similarity measure that compares the business semantics of the services to be integrated |
| $w_{s_{sem}}$ | Weight of the similarity measure for the business semantics of the services |
| $sim_{s_{syn}}(iq_{s_{syn}}, ic_{s_{syn}})$ | Local similarity measure that compares the syntactical / technical characteristics of the services to be integrated |
| $w_{s_{syn}}$ | Weight of the similarity measure for syntactical / technical characteristics of the services |

A core application component measure $sim_{core_{comp}}$ may be further defined as the weighted average of the local similarity measures for the business semantics and the syntactical/technical characteristics of the core application components to be compared:

$$sim_{core_{comp}}\left(iq_{core_{comp}}, ic_{core_{comp}}\right) =$$

$$\frac{w_{cc_{sem}} * sim_{cc_{sem}}(iq_{cc_{sem}}, ic_{cc_{sem}}) + w_{cc_{ext_{cap}}} * sim_{cc_{ext_{cap}}}\left(iq_{cc_{ext_{cap}}}, ic_{cc_{ext_{cap}}}\right)}{w_{cc_{sem}} + w_{cc_{ext_{cap}}}}$$

| Explanations | |
|---|---|
| $iq_{core_{comp}}$ | Query case attribute of the core applications component(s) that need to be extended/ adapted |
| $ic_{core_{comp}}$ | Integration case attribute of the core applications component(s) that have been extended/ adapted |
| $sim_{cc_{sem}}(iq_{cc_{sem}}, ic_{cc_{sem}})$ | Local similarity measure that compares the business semantics of the core application component(s) |
| $w_{cc_{sem}}$ | Weight of the similarity measure for the business semantics of the core application components |

| | |
|---|---|
| $$sim_{cc_{ext_{cap}}}\left(iq_{cc_{ext_{cap}}}, ic_{cc_{ext_{cap}}}\right)$$ | Local similarity measure that compares the technical extension capabilities of the core application capabilities of the core application component(s) |
| $$w_{cc_{ext_{cap}}}$$ | Weight of the similarity measure for the technical extension capabilities of the core application component(s) |

The core application component extensibility capability measure $sim_{cc_{ext_{cap}}}$ in the core application component measure may be further defined as the weighted average of local similarity measures for the UI extension capabilities and process extension capabilities:

$$sim_{cc_{ext_{cap}}}\left(iq_{cc_{ext_{cap}}}, ic_{cc_{ext_{cap}}}\right) =$$

$$\frac{w_{cc_{ui_{ext}}} * sim_{cc_{ui_{ext}}}\left(iq_{cc_{ui_{ext}}}, ic_{cc_{ui_{ext}}}\right) + w_{cc_{pro_{ext}}} * sim_{cc_{pro_{ext}}}\left(iq_{cc_{pro_{ext}}}, ic_{cc_{pro_{ext}}}\right)}{w_{cc_{ui_{ext}}} + w_{cc_{pro_{ext}}}}$$

| Explanations | |
|---|---|
| $$iq_{cc_{ext_{cap}}}$$ | Query case attribute that defines the technical extension capabilities of the core application |

(continued)

| Explanations | |
|---|---|
| $ic_{cc_{ext_{cap}}}$ | component(s) Integration case attribute that defines the technical extension capabilities of the core application component(s) |
| $sim_{cc_{ui_{ext}}}\left(iq_{cc_{ui_{ext}}}, ic_{cc_{ui_{ext}}}\right)$ | Local similarity measure that compares the UI extension capabilities of the core application component(s) |
| $w_{cc_{ui_{ext}}}$ | Weight of the similarity measure for the UI extension capabilities of the core application component(s) |
| $sim_{cc_{pro_{ext}}}\left(iq_{cc_{pro_{ext}}}, ic_{cc_{pro_{ext}}}\right)$ | Local similarity measure that compares the process extension capabilities of the core application component(s) |
| $w_{cc_{pro_{ext}}}$ | Weight of the similarity measure for the process extension capabilities of the core application component(s) |

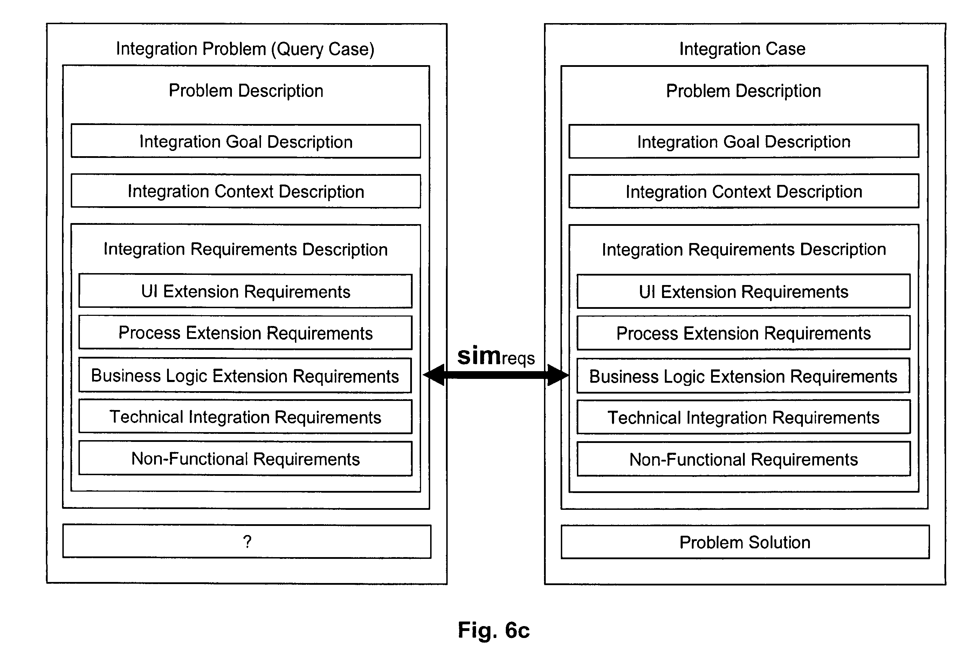

Fig. 6c shows an example of integration requirements similarity measure according to one embodiment. The integration requirements similarity measure $sim_{reqs}$ may be defined as the weighted average of local similarity measures for the UI extension requirements, the process extension requirements, the business logic extension requirements, the technical integration requirements, and the non-functional requirements attributes:

$$sim_{reqs}\left(iq_{reqs}, ic_{reqs}\right) =$$

$$\frac{w_{ui} * sim_{ui}(iq_{ui}, ic_{ui}) + w_p * sim_p\left(iq_p, ic_p\right) + w_{ble} * sim_{ble}(iq_{ble}, ic_{ble})}{w_{ui} + w_p + w_{ble} + w_{ti} + w_{nfr}} +$$

$$\frac{w_{ti} * sim_{ti}(iq_{ti}, ic_{ti}) + w_{nfr} * sim_{nfr}\left(iq_{nfr}, ic_{nfr}\right)}{w_{ui} + w_p + w_{ble} + w_{ti} + w_{nfr}}$$

| Explanations | |
|---|---|
| $iq_{reqs}$ | Requirements specification part of the query case |
| $ic_{reqs}$ | Requirements specification part of the integration case |
| $sim_{ui}(iq_{ui}, ic_{ui})$ | Local similarity measure that compares the UI extension requirements of the cases |
| $w_{ui}$ | Weight of the similarity measure for UI extension requirements |
| $sim_p (iq_p), ic_p)$ | Local similarity measure that compares the process extension requirements of the cases |
| $w_p$ | Weight of the similarity measure for process extension requirements |

(continued)

| Explanations | |
|---|---|
| $sim_{ble}(iq_{ble}, ic_{ble})$ | Local similarity measure that compares the business logic extension requirements of the cases |
| $w_{ble}$ | Weight of the similarity measure for the business logic extension requirements |
| $sim_{ti}(iq_{ti}, ic_{ti})$ | Local similarity measure that compares the technical integration requirements of the cases |
| $w_{ti}$ | Weight of the similarity measure for the technical integration requirements |
| $sim_{nfr}(iq_{nfr}, ic_{nfr})$ | Local similarity measure that compares the non-functional integration requirements of the cases |
| $w_{nfr}$ | Weight of the similarity measure for non-functional integration requirements |

The UI extension requirements measure may be defined as the weighted average of the local similarity measures of the attributes within the UI extension requirements sub-category as shown in Table 3 of Appendix A. The UI extension requirements measure may be defined as:

$$sim_{ui}(iq_{ui}, ic_{ui}) = \frac{\sum_{i=1}^{n} w_i * sim_i(iq_{ui_i}, ic_{ui_i})}{\sum_{i=1}^{n} w_i}$$

The process extension requirements measure may be defined as a weighted average of the local similarity measures of the attributes within the process extension requirements sub-category shown in Table 4 of Appendix A. The process extension requirements measure may be defined by:

$$sim_p(iq_p, ic_p) = \frac{\sum_{i=1}^{j} w_{p_i} * sim_i(iq_{p_i}, ic_{p_i})}{\sum_{i=1}^{j} w_{p_i}}$$

The business logic extension requirements measure may be defined as the weighted average of the local similarity measures of the attributes within the business logic extension requirements sub-category shown in Table 5 of Appendix A. The business logic extension requirements measure may be defined as:

$$sim_{ble}(iq_{ble}, ic_{ble}) = \frac{\sum_{i=1}^{k} w_{ble_i} * sim_i(iq_{ble_i}, ic_{ble_i})}{\sum_{i=1}^{k} w_{ble_i}}$$

The technical integration requirements measure may be a weighted average of the local similarity measures of the attributes within the technical integration requirements sub-category of Table 6 of Appendix A. This technical integration requirements measure may be defined as:

$$sim_{ti}(iq_{ti}, ic_{ti}) = \frac{\sum_{i=1}^{r} w_{ti_i} * sim_i(iq_{ti_i}, ic_{ti_i})}{\sum_{i=1}^{r} w_{ti_i}}$$

The non-functional requirements measure may be defined as a weighted average of the local similarity measures of the attributes within the non-functional requirements sub-category shown in Table 7 of Appendix A. The non-functional requirements measure may be defined as:

$$sim_{nfr}(iq_{nfr}, ic_{nfr}) = \frac{\sum_{i=1}^{p} w_{nfr_i} * sim_i(iq_{nfr_i}, ic_{nfr_i})}{\sum_{i=1}^{p} w_{nfr_i}}$$

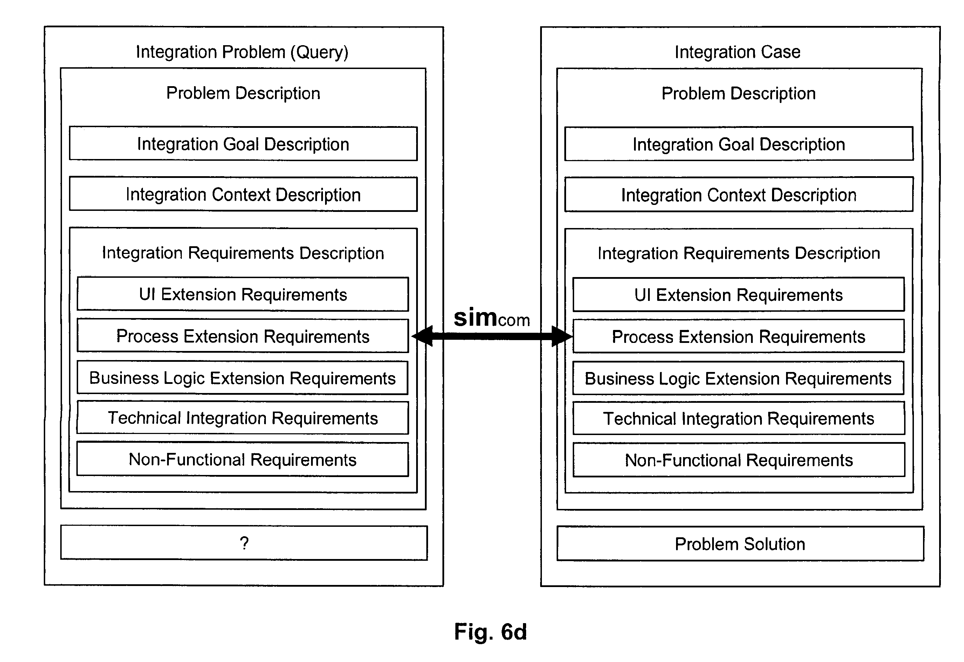

Fig. 6d depicts the global integration case similarity measure according to one embodiment. The global integration case similarity measure $Sim_{com}$ may be defined as the weighted average of the local similarity measures for the integration goal, the integration context, and the integration requirements categories:

$$sim_{com}(iq, ic) =$$

$$\frac{w_{goal} * sim_{goal}(iq_{goal}, ic_{goal}) + w_{ctx} * sim_{ctx}(iq_{ctx}, ic_{ctx}) + w_{reqs} * sim(iq_{reqs}, ic_{reqs})}{w_{goal} + w_{ctx} + w_{reqs}}$$

The global integration case similarity measure weights the local similarity measures for the three categories in the problem description to determine the global similarity measure. This measure may be used to determine if the integration case is similar to the integration problem. The above calculations may be performed for many different integration cases. The most similar integration cases may then be determined and provided to the service integrator.

Method Flow

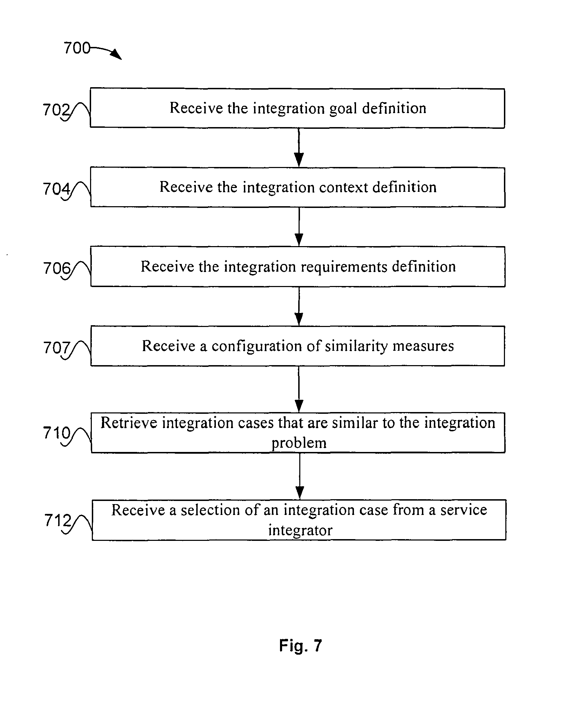

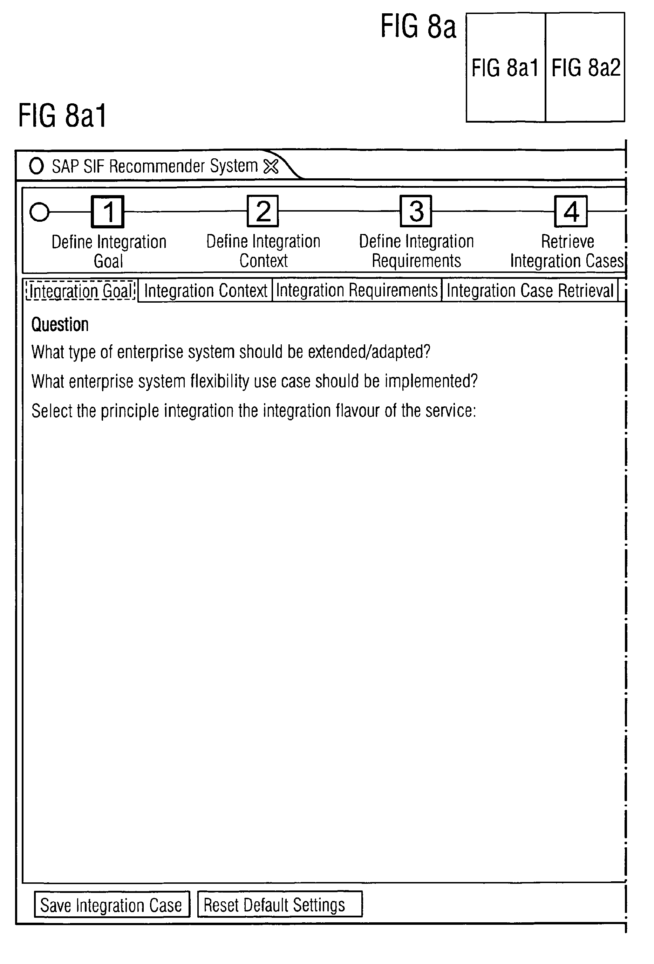

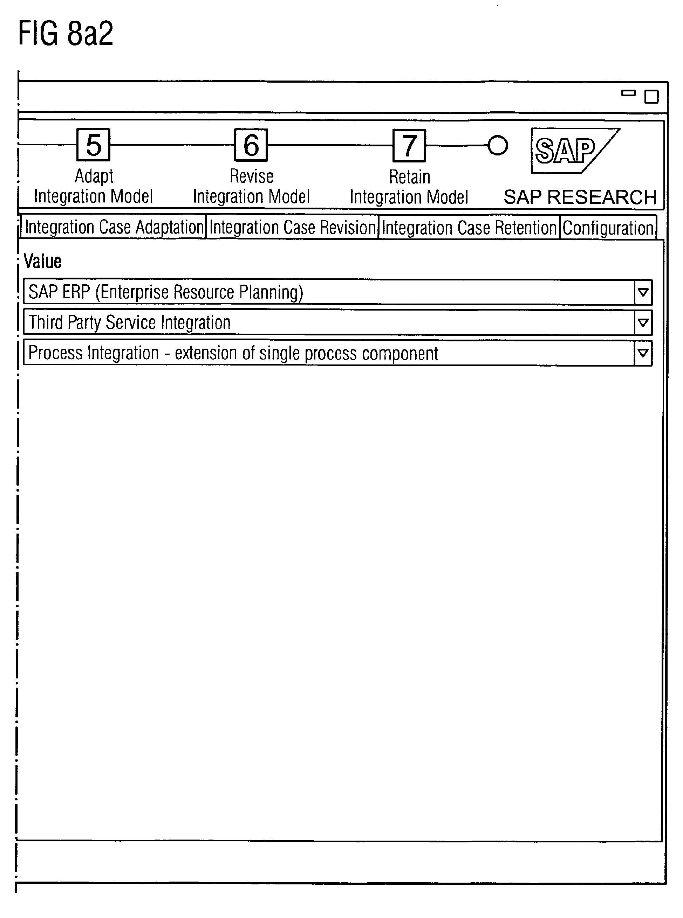

Fig. 7 depicts a simplified flowchart 700 for performing case-based retrieval according to one embodiment. The following uses a wizard-based questionnaire to define the integration problem. The service integrator can answer questions regarding the problem and be provided with similar integration cases. At 702, an integration goal definition is received. Fig. 8a shows an interface used by the service integrator to define the integration goal attributes according to one embodiment. Questions to define the attributes of the type of enterprise system that should be extended, the flexibility of use case that should be implemented, and the principle integration of the integration flavor are shown. A drop down menu of predefined options may be provided to the service integrator to define the attributes.

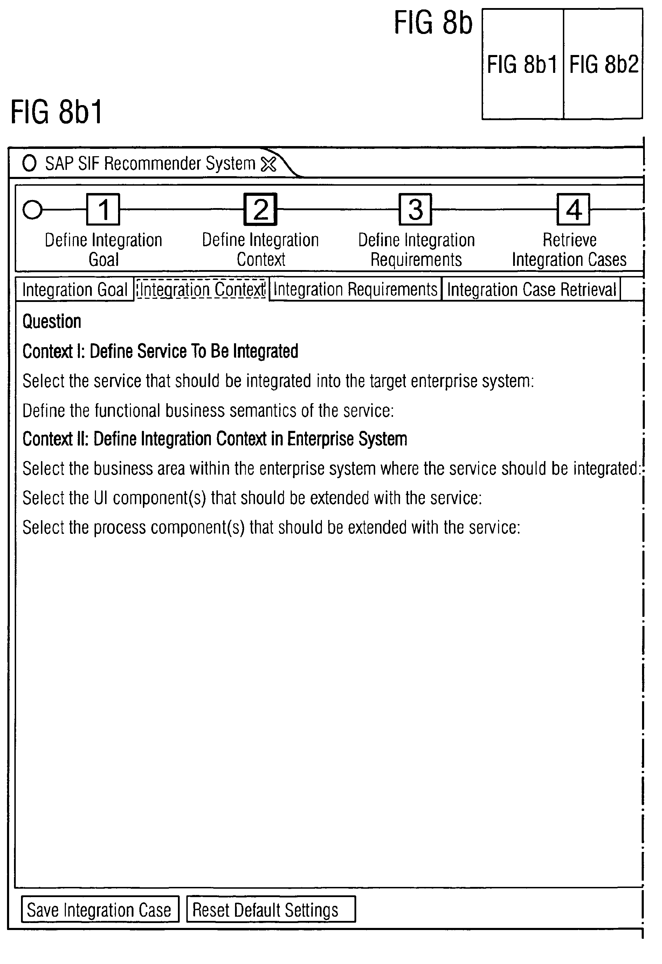

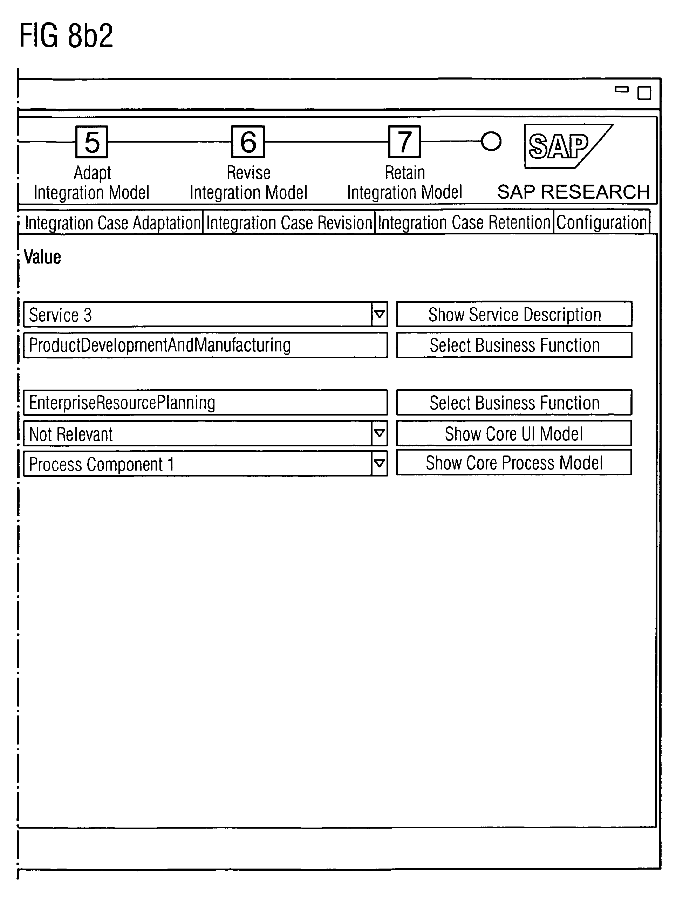

Referring back to Fig. 7, at 704, the integration context definition is received. Fig. 8b shows an interface used by service integrator to input the integration context definition according to one embodiment. Questions to define the attributes for the service, the functional business semantics, the business area, the UI components, and the process components are shown. The answers to the questions define values of the attributes.

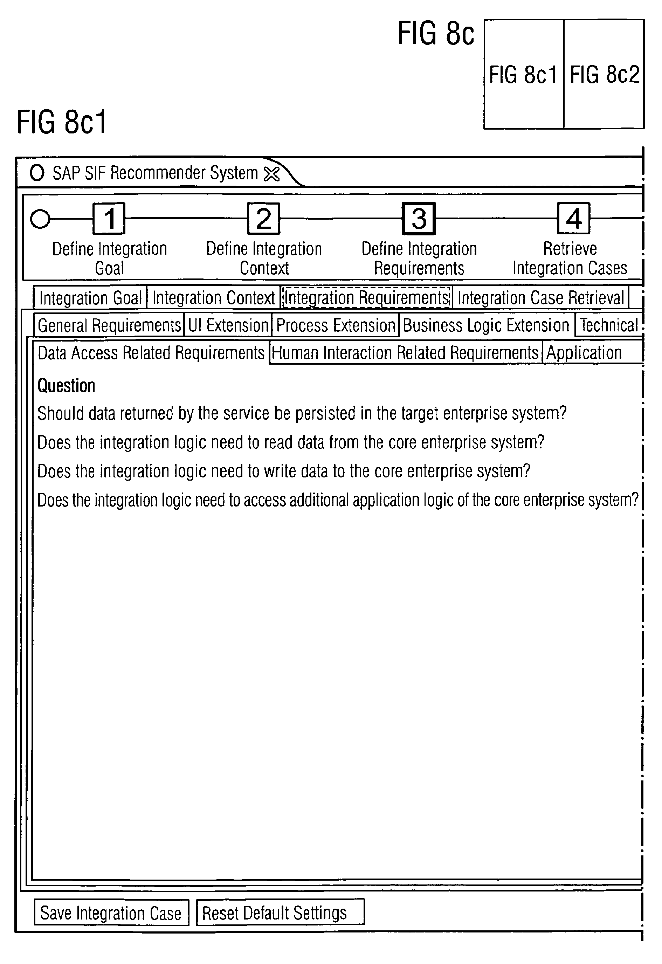

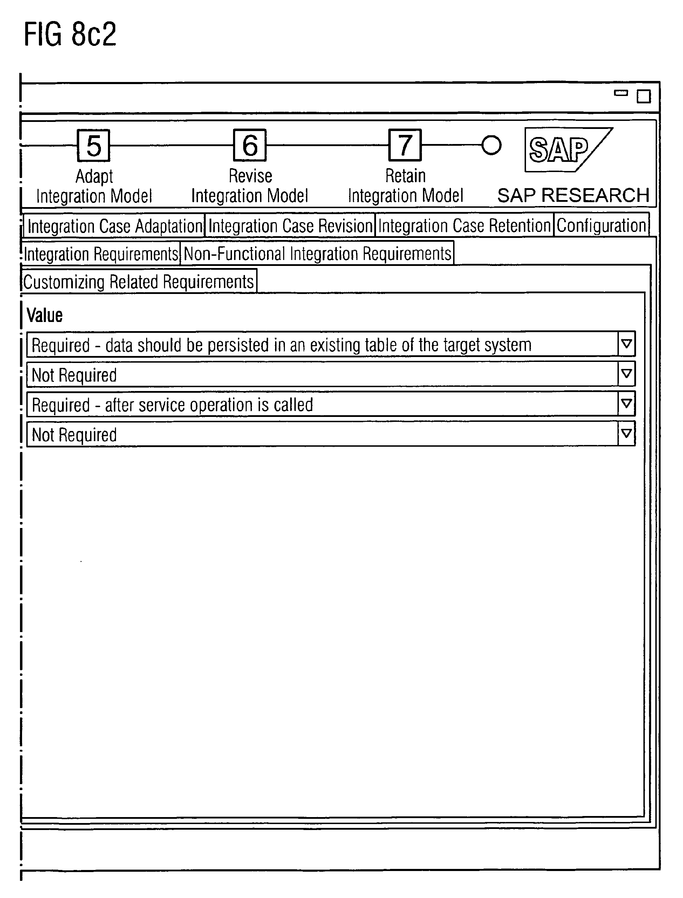

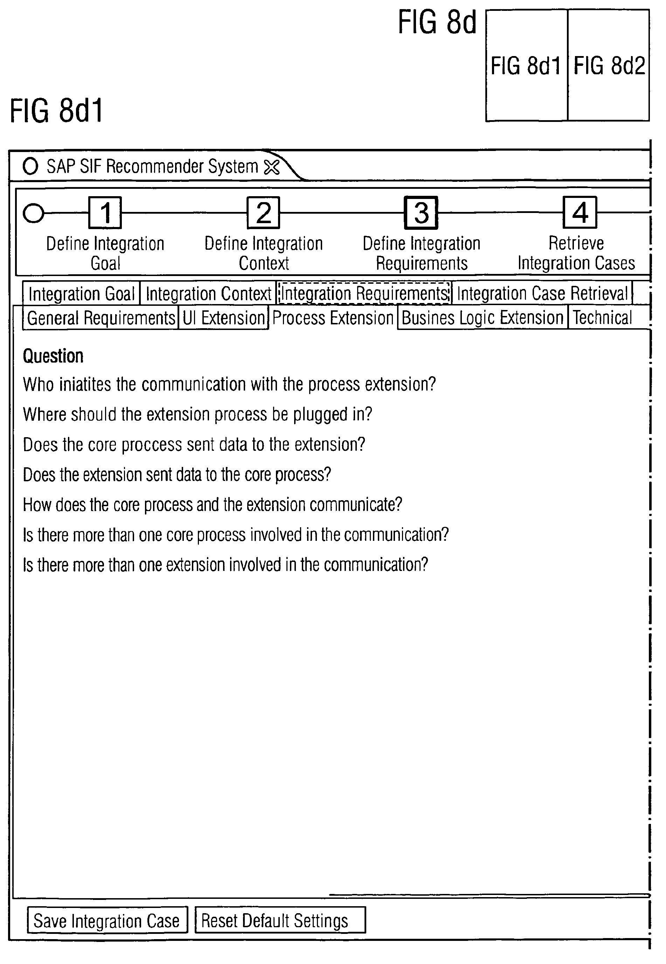

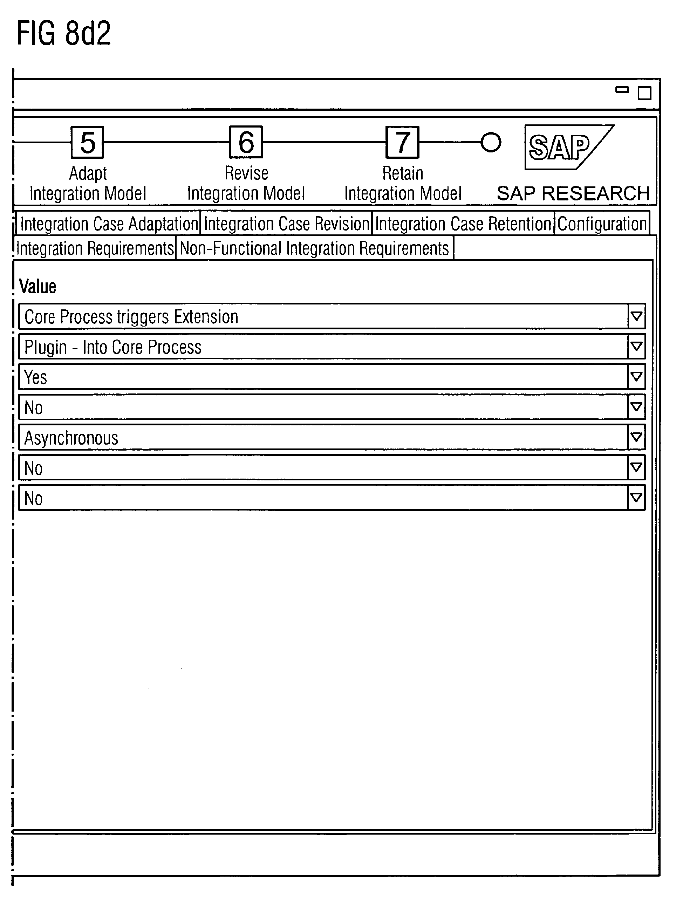

Referring back to Fig. 7, at 706, the integration requirements definition is received. Figs. 8c and 8d depict interfaces that allow a service integrator to input information for the integration requirements attributes according to one embodiment. Questions to define data access attributes for persisting data, reading data, writing data, and accessing additional logic are shown in Fig. 8c. In Fig. 8d, questions to define attributes for process extension requirements are shown in Fig. 8d. Although not shown, other questions to define attributes for business logic extensions, technical integration requirements, and non-functional integration requirements may be provided.

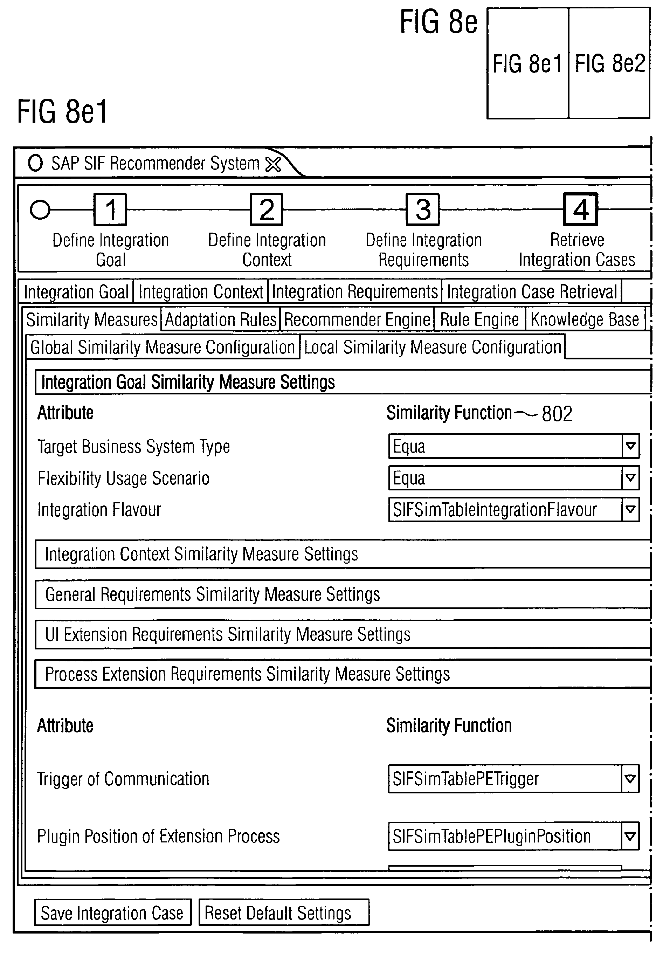

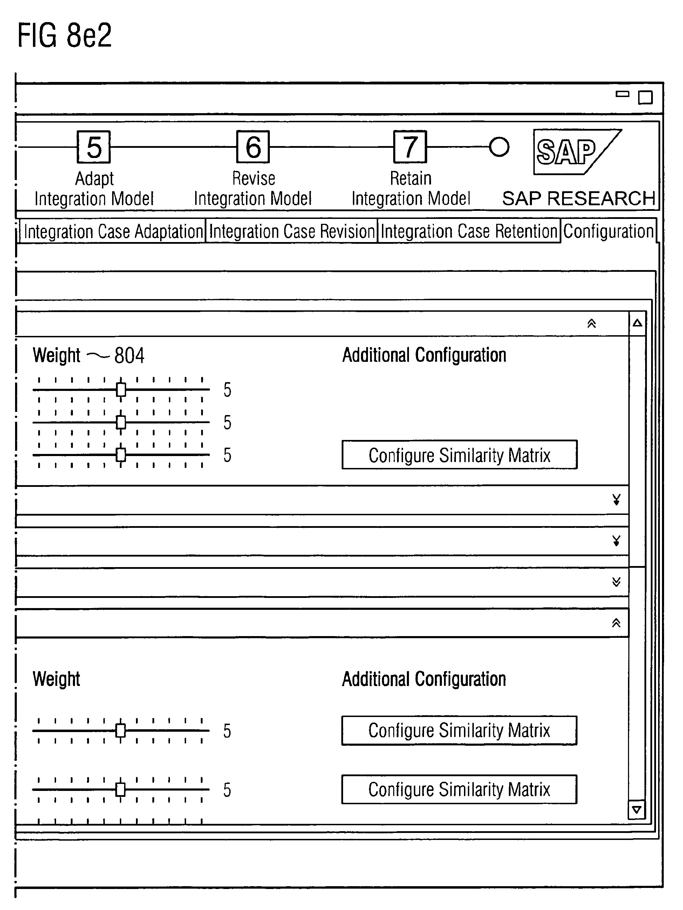

Referring back to Fig. 7, at 708, in an optional step, a configuration of similarity measures may be received. This configures which similarity measures may be used for different attributes. Fig. 8e shows an interface that allows a service integrator to input similarity measures to be used with different attributes according to one embodiment. For example, similarity measures for integration goals, integration contexts, and integration requirements may be input. A similarity measure may be selected at 802. Also, a weight for that similarity measure may be input at 804. The weight indicates the weighting that is provided to that similarity measure.

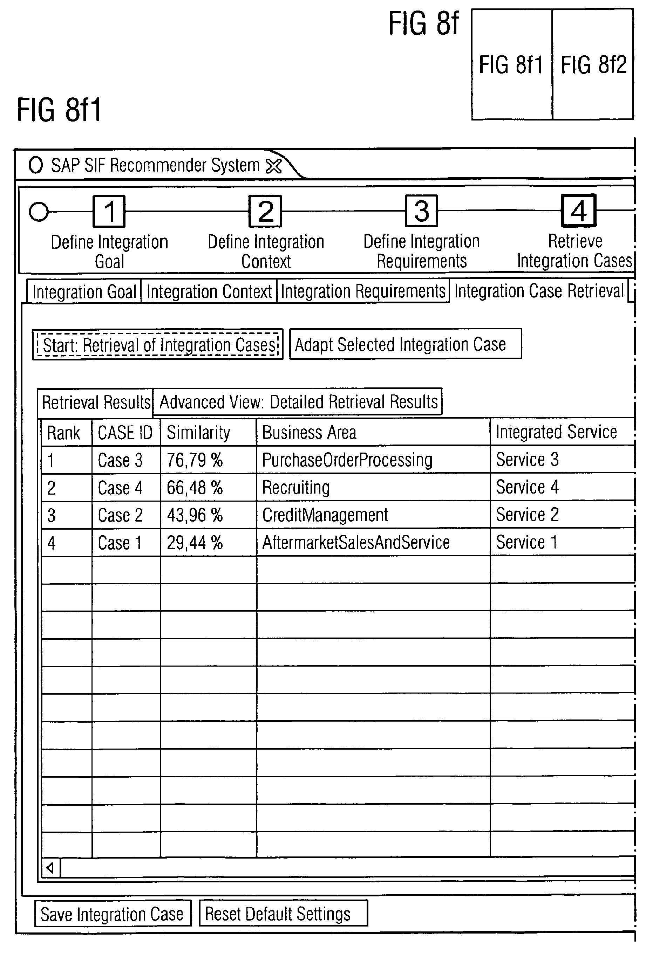

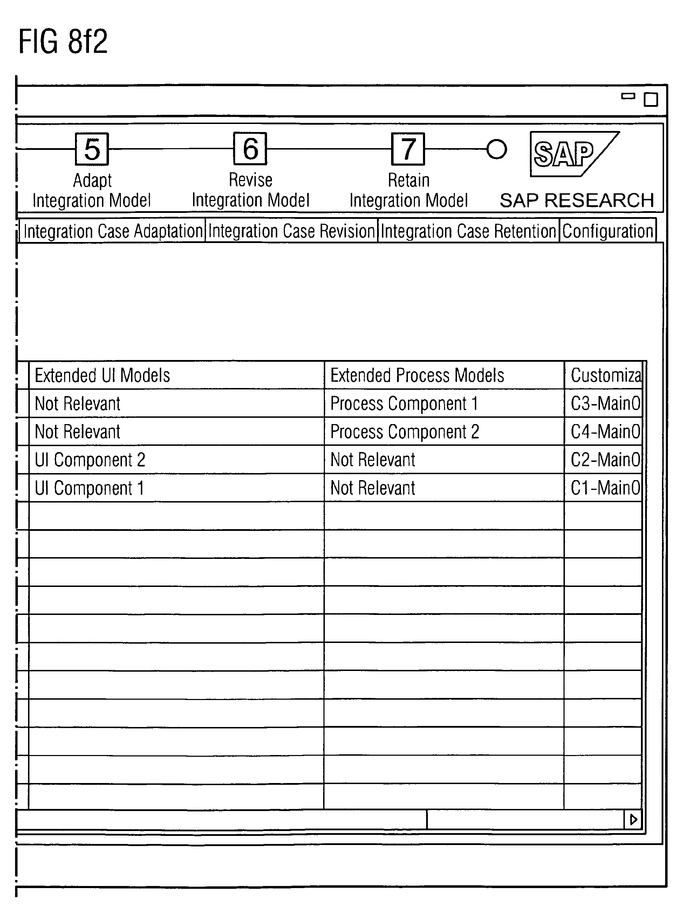

Referring back to Fig. 7, at 710, integration cases that are similar to the integration problem are retrieved. For example, a certain number of integration cases that are deemed to be the most similar (e.g., have a similarity above a threshold) may be retrieved. Fig. 8f shows an example of retrieved results according to one embodiment. As shown, four different integration cases have been retrieved and ranked based on their similarity. The results show the similarity rating, business area, service, UI model, and process model.

At 712, a selection of an integration case is received from a service integrator. The problem solution of the integration case may then be adapted for the integration problem.

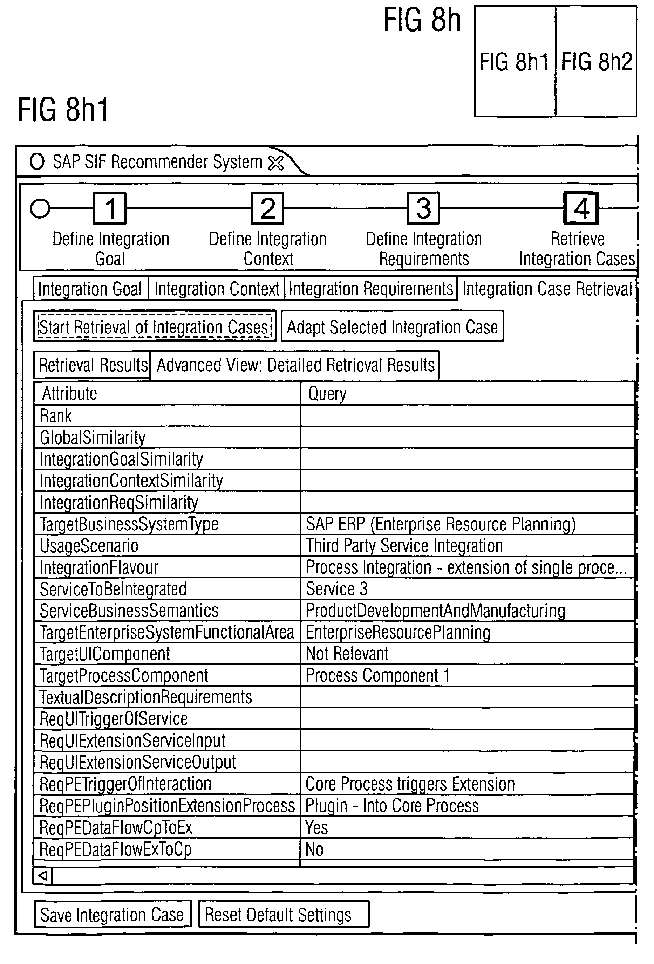

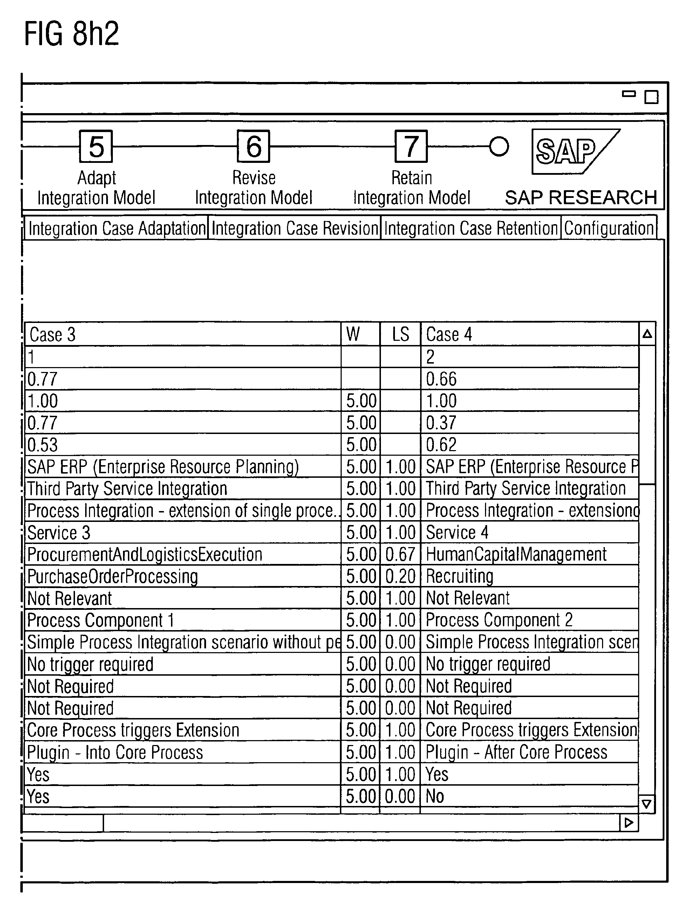

A service integrator may also want to know more details about the retrieved integration cases. In this case, the service integrator may select an integration case and be provided with more details as shown in Figs. 8h and 8i.

Description of Standard Enterprise System

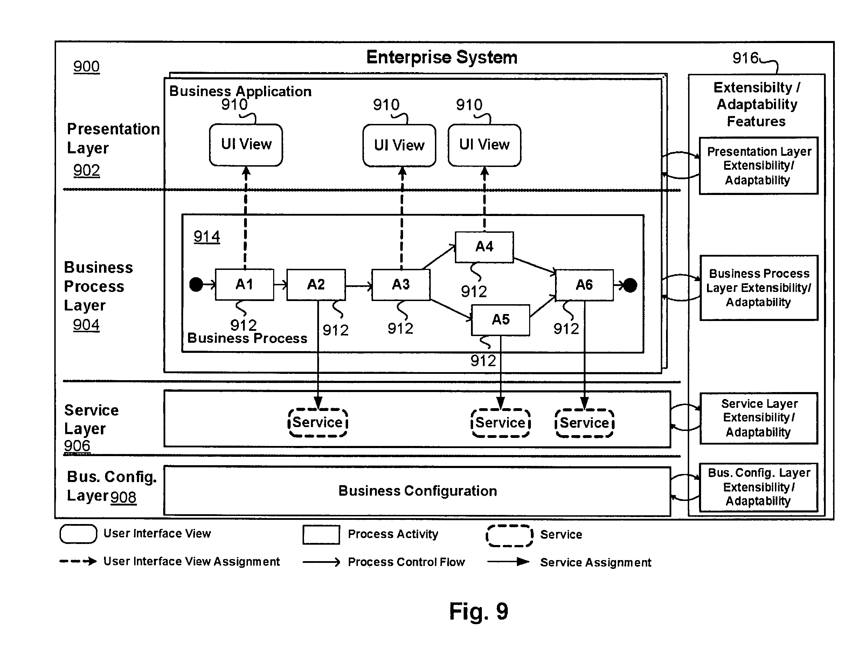

The case-based retrieval method may be used in extending standard enterprise systems. Standard enterprise systems may be described with a single overall abstracted model that spans across four abstraction layers, such as the presentation layer, business process layer, service layer, and business configuration layer. An enterprise system includes multiple business applications or reference processes that leverage a common service and business configuration layer. Fig. 9 shows a more detailed example of an enterprise system 900 according to one embodiment. Enterprise system 900 may be described with a single overall abstracted model that spans across a number (e.g., four) of abstraction layers, such as a presentation layer 902, a business process layer 904, a service layer 906, and a business configuration layer 908. Enterprise system 900 includes multiple (service-based) business applications that leverage a common service layer 906 and business configuration layer 908.

Presentation layer 902 comprises all artifacts and components for a service integrator interface (UI) part of the business application. In one embodiment, UI components (UI views 910) for a dedicated UI platform with all interrelations are located within presentation layer 902. The service integrator interface will be described in more detailed below.

Business process layer 904 contains models 912 of business processes 914 that are realized within the business application. Modeling elements for business processes may contain references to elements on other layers. For example, a human activity in a business process can refer to a UI component 910 with the implementation of the human service integrator interface. An automated activity can refer to a service declared in the service layer 906 with the implementation of the needed business functionality.

Service layer 906 contains services offered by enterprise system 900. Core services provide access to business objects. Composite services represent compositions of core services into larger bundles to provide advanced higher-value business functionality or application logic.

Business configuration layer 908 contains the configuration data for business applications with available parameters and configuration options (also known as 'customizing') for business applications.

In order to adapt standard business applications to customer specific needs, enterprise systems 900 provide a large set of proprietary extensibility/adaptability features 916.

Example of Enterprise System Adaptation

The integration of services into the enterprise systems will now be described. In order to adapt standard business applications to customer specific needs, enterprise systems include proprietary extensibility/adaptability features. The following describes an example of an extension of a service to a standard enterprise system.

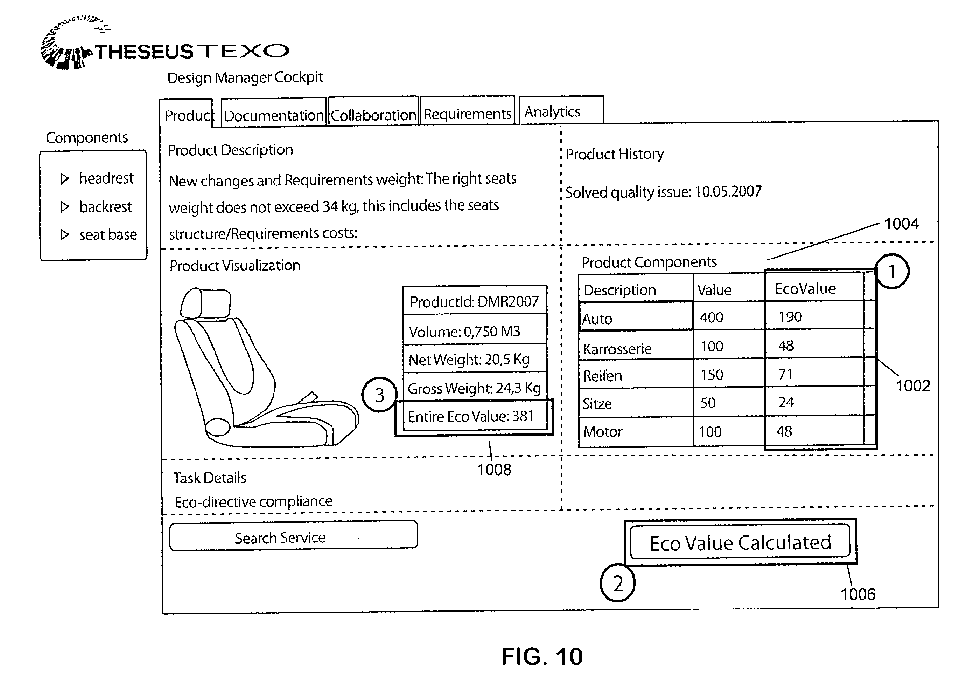

Fig. 10 shows an example of an interface 1000 of a business application according to one embodiment. As a result of legal changes in export guidelines, a manufacturer of car seats has to certify its products to guarantee that materials used within the car seat comply with environmental laws. The core version of business application does not support the calculation of eco values for a given car seat. Thus, the business application needs to be extended to support this calculation.

The missing functionality has been created and published as a service on the service marketplace by a service provider. The service allows the calculation of eco values for products including certification. A product designer as a service integrator of a product lifecycle management (PLM) application in the company wants to extend business application with this missing kind of functionality. The product designer takes the role of a service consumer and accesses the service marketplace directly from within the business application. The product designer searches for services that provide the missing functionality and receives a list of matching services from various service providers certified for enterprise system 900. According to a working context, the designer selects a service called *"Eco-Calculator"* and purchases it on the marketplace.

Subsequently the service is automatically integrated into the core business application without running a manual integration project. The following extensions are performed to the core business application to extend interface 1000 with (1) an additional table column 1002 ("Eco Value") in a product components table 1004, (2) an additional button 1006 ("Calculate Eco Value") and (3) an additional field 1008 indicating the total eco value for the car seat ("Entire Eco Value").

After the service is integrated into the business application, the service can be used by the product designer to calculate eco values for a given bill of material. If the total eco value fulfils the legal requirements, a certificate is generated and passed to the consumer application.

This scenario shows an example for extending a core UI component with additional UI elements. Based on the same principles a core process model can be extended, e.g., by inserting additional process steps.

Conclusion

Particular embodiments provide many advantages. For example, a systematic, tool-supported definition of retrieval of existing integration knowledge is provided. The case-based retrieval framework provides a platform with a rich knowledge base for the systematic, tool-supported definition and retrieval of integration cases already solved in the past. This allows systematic reuse of valuable integration-, adaptation and extension experience of past implementation projects. The framework allows specification of new integration problems and retrieval of existing integration cases that are similar to a new integration problem to be solved by applying similarity measures within a case retrieval algorithm. The knowledge base allows for a search of extension size adaptation knowledge of past integration projects.

The description and retrieval of similar, existing integration cases on a problem space level using integration cases is provided. Integration scenarios may be described using a set of attributes formulated in a meta-model. Search and re-use steps may then build upon the abstracted information on a problem space level. This enables gathering of integration requirements for a central questionnaire as disclosed in the interfaces described in Figs. 8a-8h and enables searching for existing integration cases with similar integration requirements and the corresponding solutions.

Also, the description and retrieval of integration scenarios on a problem space level includes scenarios within extension/adaptation needs of different application layers of the enterprise system. Integration cases cover extension/adaptation as well as service mediation needs in a single format. Problem descriptions of integration cases include requirements/integration needs of various application layers in categories. This allows systematic searches for existing integration cases with similar integration requirements/needs of one of the categories.

System Diagram

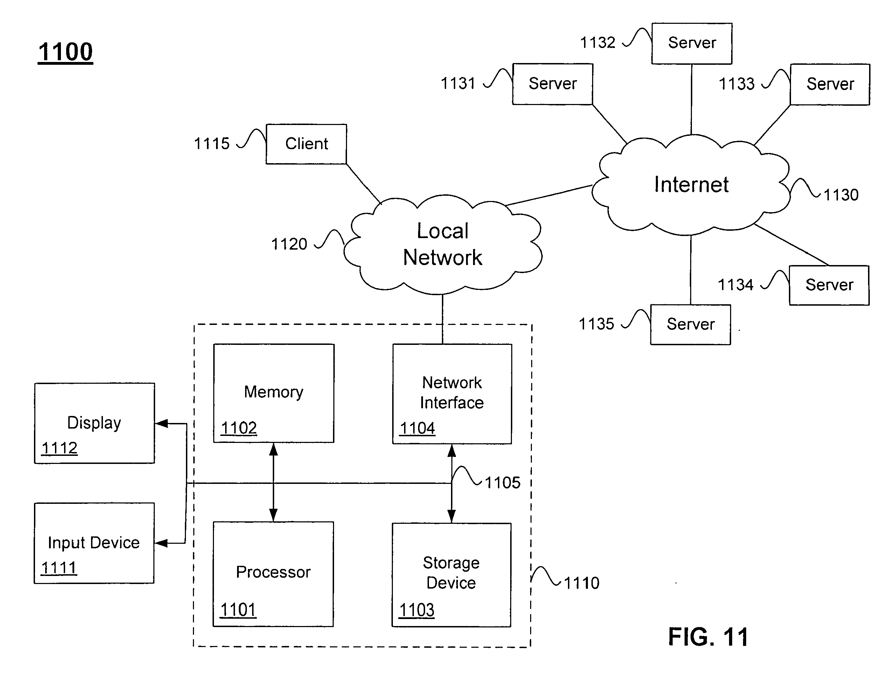

Fig. 11 illustrates hardware of a special purpose computing machine configured with a case-based retrieval framework according to one embodiment. An example computer system 1110 is illustrated in Fig. 11. Computer system 1110 includes a bus 1105 or other communication mechanism for communicating information, and a processor 1101 coupled with bus 1105 for processing information. Computer system 1110 also includes a memory 1102 coupled to bus 1105 for storing information and instructions to be executed by processor 1101, including information and instructions for performing the techniques described above, for example. This memory may also be used for storing variables or other intermediate information during execution of instructions to be executed by processor 1101. Possible implementations of this memory may be, but are not limited to, random access memory (RAM), read only memory (ROM), or both. A storage device 1103 is also provided for storing information and instructions. Common forms of storage devices include, for example, a hard drive, a magnetic disk, an optical disk, a CD-ROM, a DVD, a flash memory, a USB memory card, or any other medium from which a computer can read. Storage device 1103 may include source code, binary code, or software files for performing the techniques above, for example. Storage device and memory are both examples of computer readable storage mediums.

Computer system 1110 may be coupled via bus 1105 to a display 1112, such as a cathode ray tube (CRT) or liquid crystal display (LCD), for displaying information to a computer service integrator. An input device 1111 such as a keyboard and/or mouse is coupled to bus 1105 for communicating information and command selections from the service integrator to processor 1101. The combination of these components allows the service integrator to communicate with the system. In some systems, bus 1105 may be divided into multiple specialized buses.

Computer system 1110 also includes a network interface 1104 coupled with bus 1105. Network interface 1104 may provide two-way data communication between computer system 1110 and the local network 1120. The network interface 1104 may be a digital subscriber line (DSL) or a modem to provide data communication connection over a telephone line, for example. Another example of the network interface is a local area network (LAN) card to provide a data communication connection to a compatible LAN. Wireless links are another example. In any such implementation, network interface 1104 sends and receives electrical, electromagnetic, or optical signals that carry digital data streams representing various types of information.

Computer system 1110 can send and receive information through the network interface 1104 across a local network 1120, an Intranet, or the Internet 1130. In the Internet example, software components or services may reside on multiple different computer systems 1110 or servers 1131-1135 across the network. The processes described above may be implemented on one or more servers, for example. A server 1131 may transmit actions or messages from one component, through Internet 1130, local network 1120, and network interface 1104 to a component on computer system 1110. The software components and processes described above may be implemented on any computer system and send and/or receive information across a network, for example.

Particular embodiments may be implemented in a non-transitory computer-readable storage medium for use by or in connection with the instruction execution system, apparatus, system, or machine. The computer-readable storage medium contains instructions for controlling a computer system to perform a method described by particular embodiments. The instructions, when executed by one or more computer processors, may be operable to perform that which is described in particular embodiments.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents may be employed without departing from the scope of the invention as defined by the claims.

## Appendix A

| Attribute / Feature | Attribute Type | Description and Values |
|---|---|---|
| TargetBusinessSystemType | Symbol | Defines the enterprise system that should be extended/adapted.<br><br>Values:<br>— SAP CRM (Customer Relationship Management)<br>— SAP ERP (Enterprise Resource Planning)<br>— SAP PLM (Product Lifecycle Management)<br>— SAP SCM (Supply Chain Management)<br>— SAP SRM (Supplier Relationship Management<br>— SAP Business ByDesign<br>— Other |
| UsageScenario | Symbol | Defines the customizing or flexibility use case that should be implemented.<br><br>Values:<br>— Third Party Service Integration<br>— Field Extensibility<br>— Custom Forms<br>— Others |
| IntegrationFlavor | Symbol | Defines the principle integration flavor of the service in the target consumption environment of the enterprise system.<br><br>Values:<br>— UI Integration - extension of single UI component<br>— UI Integration - extension of multiple UI components<br>— Process Integration - extension of single process component<br>— Process Integration - extension of multiple process components<br>— UI and Process Integration - cross-layer extension |

**Table 1: Case Attributes - Integration Goal Specification**

| Attribute / Feature | Attribute Type | Description and Values |
|---|---|---|
| **Service Context (= Service Provider Context)** | | |
| ServiceToBeIntegrated | Model | Defines the service (e.g. provided by an ISV or eco system partner) that should be integrated into the target enterprise system. Service is modeled in a service ontology based on USDL) |
| ServiceBusinessSemantics | Taxonomy | Defines the business semantics of the service to be integrated. Values of this attribute are provided by a business domain ontology. |
| **Enterprise System Context (= Service Consumer Context)** | | |
| TargetEnterpriseSystem FunctionalArea | Taxonomy | Defines the business semantics of the target components in the enterprise system that should be extended by the complementary service. Values of this attribute are provided by a business domain ontology. |
| TargetUIComponent(s) | Model | Defines the target UI component(s) of the enterprise system that should be extended/adapted (in case of UI components are involved in the selected integration flavor).<br><br>UI components are described by an UI ontology that is based on Diamodl (abstract UI description language) and includes dedicated extension points. |
| TargetProcessComponent(s) | Model | Defines the target process component(s) of the enterprise system that should be extended/adapted (in case of process components are involved in the selected integration flavor).<br><br>Process components are described by an BPMN Ontology that includes dedicated extension points. |

**Table 2: Case Attributes - Integration Context Specification**

| Attribute / Feature | Attribute Type | Description and Values |
|---|---|---|
| TextualDescription Requirements | String | Textual description of the integration requirements. |
| ReqUITriggerOfService | Symbol | Defines how the service should be triggered within the core UI component.<br><br>Values (multiple selection):<br>— Not Relevant<br>— No trigger required<br>— Trigger by an existing UI event<br>— Trigger by adding a new button<br>— Trigger by adding a new menu item<br>— Required - adding multiple triggers |
| ReqUIExtensionService Input | Symbol | Defines whether the core UI component needs to be extended with additional UI controls in order to gather information that is required as input data to call the integrated service.<br><br>Values (multiple selection possible):<br>— Not Relevant<br>— Not Required<br>— Required - adding a new tab control<br>— Required - adding a new panel<br>— Required - adding a new form item<br>— Required - adding a new checkbox<br>— Required - adding a new list box<br>— Required - adding a new combo-box<br>— Required - adding a new tree item<br>— Required - adding multiple extensions |
| ReqUIExtensionService Output | Symbol | Defines whether the core UI component needs to be extended with additional UI controls in order to show/display result values of the service invocation.<br><br>Values (multiple selection possible):<br>— Not Relevant<br>— Not Required<br>— Required - adding a new table column<br>— Required - adding a new table<br>— Required - adding a new tab control<br>— Required - adding a new panel<br>— Required - adding a new form item<br>— Required - adding a new checkbox<br>— Required - adding a new list box<br>— Required - adding a new combo-box<br>— Required - adding multiple extensions |
| ... | ... | ... |

**Table 3: Case Attributes - UI Extension Requirements**

| Attribute / Feature | Attribute Type | Description and Values |
|---|---|---|
| ReqPETriggerOfInteraction | Symbol | Defines the initiator (triggering component) of a process extension scenario.<br><br>Values:<br>— Not Relevant<br>— Core Process triggers Extension<br>— Extension triggers Core Process |
| ReqPEPluginPosition ExtensionProcess | Symbol | Defines the position in respect to the core process where an extension process should be plugged in.<br><br>Values:<br>— Not Relevant<br>— Plugin - Before Core Process<br>— Plugin - Into Core Process<br>— Plugin - After Core Process |
| ReqPEDataFlowCpToEx | Boolean | Defines whether data should flow from the core process to the extension process.<br><br>Values:<br>— No / Yes |
| ReqPEDataFlowExToCp | Boolean | Defines whether data should flow from the extension process to the core process.<br><br>Values:<br>— No / Yes |
| ReqPECommunication Mode | Symbol | Defines the communication mode between the core process and the extension process.<br><br>Values:<br>— Not Relevant<br>— Asynchronous<br>— Synchronous |
| ReqPEMultiple InvolvedCP | Boolean | Defines whether multiple core processes are involved in the integration scenario.<br><br>Values:<br>— No / Yes |
| ReqPEMultiple InvolvedEx | Boolean | Defines whether multiple extension processes are involved in the integration scenario.<br><br>Values:<br>— No / Yes |
| ... | ... | ... |

**Table 4: Case Attributes - Process Extension Requirements**

| Attribute / Feature | Attribute Type | Description and Values |
|---|---|---|
| ReqBLEDataPersistence | Symbol | Defines whether data returned from the service should be persisted in the target enterprise system environment.<br><br>Values:<br>– Not Required<br>– Required - data should be persisted in an existing table of the target system<br>– Required - data should be persisted in an additional column of an existing table<br>– Required - data should be persisted in a new table<br>– Required - data should be persisted in an existing field of a business object<br>– Required - data should be persisted in a new field of a business object |
| ReqBLEReadAccessTo EnterpriseSystem | Boolean | Defines whether the integration logic has to read data from the core enterprise system.<br><br>Values:<br>– Not Required / Required |
| ReqBLEWriteAccessTo EnterpriseSystem | Boolean | Defines whether the integration logic has to write data into the core enterprise system.<br><br>Values:<br>– Not Required / Required |
| ReqBLEAccessBusiness LogicOfEnterpriseSystem | Boolean | Defines whether the integration logic needs to access additional business logic on the core enterprise system.<br><br>Values:<br>– Not Required / Required |
| ReqBLEInteractive Service integratorTask | Symbol | Defines whether an interactive service integrator task is required in the integration logic.<br><br>Values:<br>– Not Required<br>– Required - before a service operation is called<br>– Required - after service operation is called |
| ReqBLEManualService integratorTask | Symbol | Defines whether a human service integrator task is required in the integration logic.<br><br>Values:<br>– Not Required<br>– Required - before a service operation is called<br>– Required - after service operation is called |
| ReqBLEAdjustCustomizing Parameter | Symbol | Defines whether a customizing parameter has to be set/adjusted in the target enterprise system. |

| | | Values:<br>– Not Required<br>– Required - on single customizing parameter<br>– Required - on multiple customizing parameters |
|---|---|---|
| **ReqBLEAddCustomizing Parameter** | Symbol | Defines whether a new customizing parameter has to added in the target enterprise system.<br><br>Values:<br>– Not Required<br>– Required - add single customizing parameter<br>– Required - add multiple customizing parameters |
| ... | ... | ... |

**Table 5: Case Attributes - Business Logic Extension Requirements**

| Attribute / Feature | Attribute Type | Description and Values |
|---|---|---|
| **ReqSIUsageOfB2BStandards** | Symbol | Defines whether standard B2B protocols should be used for the communication with the external service.<br><br>Values:<br>– No Standard Used<br>– RosettaNet<br>– CIDX<br>– EDI/EDIFACT<br>– Others |
| **ReqSITechnicalProtocol** | Symbol | Defines which technical communication protocol should be used for the communication with the external service.<br><br>Values:<br>– SOAP<br>– WS Reliable Messaging<br>– REST<br>– JMS<br>– HTTP<br>– ALE/IDOC<br>– RFC<br>– EDI<br>– Others |
| ... | ... | ... |

**Table 6: Case Attributes - External Service Integration Requirements**

| Attribute / Feature | Attribute Type | Description and Values |
|---|---|---|
| ReqNFRAuthentication | Boolean | Defines whether the integration logic needs to authenticate in the communication with the external service.<br><br>Values:<br>– Not Required / Required |
| ReqNFRCaching | Boolean | Defines whether the communication is performance critical and if caching mechanisms are required.<br><br>Values:<br>– Not Required / Required |
| ReqNFRLogging | Boolean | Defines whether the communication with the external service should be logged.<br><br>Values:<br>– Not Required / Required |
| ReqNFREncryption | Boolean | Defines whether the messages sent to the service or received from the service should be encrypted.<br><br>Values:<br>– Not Required / Required |
| ReqNFRDigitalSignature | Boolean | Defines whether the messages sent to the service or received from the service should be digitally signed (e.g. as required by legal).<br><br>Values:<br>– Not Required / Required |
| ReqNFRTransactionHandling | Boolean | Defines whether some specific transaction handling is required.<br><br>Values:<br>– Not Required / Required |
| ... | ... | ... |

**Table 7: Case Attributes - Non-Functional Integration Requirements**

Claims

1. A method comprising:

storing a set of integration cases previously used for adapting a standard enterprise system, wherein integration cases include a problem description and a problem solution for the adapting of the standard enterprise system; receiving an integration problem for extending the standard enterprise system, the integration problem having a problem description and not a problem solution; determining, by a computing device, a similarity between the problem description of the integration problem and the problem description of the set of integration cases; determining one or more similar integration cases from the set of integration cases to the integration problem based on the determined similarity; and

outputting the one or more similar integrations cases to a user, wherein the problem solution for a similar integration case is usable to determine the problem solution for the integration problem.

2. The method of claim 1, wherein:

the problem description for the integration problem comprises a first set of attributes,
the problem descriptions for the set of integration cases comprise a second set of attributes, and
the similarity is determined between the first set of attributes and each of the second set of attributes.

3. The method of claim 2, further comprising determining a plurality of local similarity measures based on a comparison of similar attribute types in the first set of attributes and the second set of attributes for a respective integration case.

4. The method of claim 3, wherein determining the similarity comprises computing a global similarity measure based on the plurality of local similarity measures and/or wherein computing the global similarity measure comprises aggregating the plurality of local similarity measures according to a weighted aggregation function.

5. The method of any one of the preceding claims, wherein the problem description for the integration problem and an integration case includes an integration goal description describing a goal to be achieved by the integration of the integration problem and/or wherein the problem description for the integration problem and an integration case includes an integration context description describing a context of the integration of the integration problem.

6. The method of any one of the preceding claims, wherein the problem description for the integration problem and an integration case includes an integration requirements description describing requirements of the integration of the integration problem.

7. The method of claim 5, wherein determining the similarity comprises computing local similarity measures for an integration goal description, an integration context description, and an integration requirements description and/or wherein determining the similarity comprises computing a global similarity measure using the local similarity measures for the integration goal description, the integration context description, and the integration requirements description.

8. The method of any one of the preceding claims, wherein receiving the integration problem comprises:

outputting a questionnaire;
receiving answers to questions for the integration problem on the questionnaire; and
generating the problem description for the integration problem from the answers and/or further comprising:

determining attribute values from the answers to the questions; and
using the attribute values to determine the similarity between the integration problem and the set of integration cases.

9. The method of any one of the preceding claims, further comprising storing a new integration case including the problem description of the integration problem and a problem solution that has been adapted from the problem solution of a similar integration case.

10. A non-transitory computer-readable storage medium containing instructions for controlling a computer system to be operable to:

store a set of integration cases previously used for adapting a standard enterprise system, wherein integration cases include a problem description and a problem solution for the adapting of the standard enterprise system;
receive an integration problem for extending the standard enterprise system, the integration problem having a problem description and not a problem solution;
determine a similarity between the problem description of the integration problem and the problem description of the set of integration cases;
determine one or more similar integration cases from the set of integration cases to the integration problem based on the determined similarity; and
output the one or more similar integrations cases to a user, wherein the problem solution for a similar integration case is usable to determine the problem solution for the integration problem.

11. The computer-readable storage medium of claim 10, wherein:

the problem description for the integration problem comprises a first set of attributes,
the problem descriptions for the set of integration cases comprise a second set of attributes, and
the similarity is determined between the first set of attributes and each of the second set of attributes.

12. The computer-readable storage medium of claim 11, further operable to determine a plurality of local similarity measures based on a comparison of similar attribute types in the first set of attributes and the second set of attributes for a respective integration case.

13. The computer-readable storage medium of any of claims 10-12, wherein determine the similarity comprises compute local similarity measures for an integration goal description, an integration context description, and an integration requirements description and/or wherein determine the similarity comprises compute a global similarity measure using the local similarity measures for the integration goal description, the integration context description, and the integration requirements description.

14. The computer-readable storage medium of any of claims 10-13, wherein receive the integration problem comprises:

output a questionnaire;
receive answers to questions for the integration problem on the questionnaire; and
generate the problem description for the integration problem from the answers.

15. An apparatus comprising:

one or more computer processors; and
a computer-readable storage medium comprising instructions for controlling the one or more computer processors to be operable to:

store a set of integration cases previously used for adapting a standard enterprise system, wherein integration cases include a problem description and a problem solution for the adapting of the standard enterprise system;
receive an integration problem for extending the standard enterprise system, the integration problem having a problem description and not a problem solution;
determine a similarity between the problem description of the integration problem and the problem description of the set of integration cases;
determine one or more similar integration cases from the set of integration cases to the integration problem based on the determined similarity; and
output the one or more similar integrations cases to a user, wherein the problem solution for a similar integration case is usable to determine the problem solution for the integration problem.

100

| Rank | Integration Case | | | Similarity |
|------|------|------|------|------------|
| 1 | Case 24 | Problem 24 | Solution 24 | 73 % |
| 2 | Case 13 | Problem 13 | Solution 13 | 65 % |
| ... | ... | | | ... |

New Integration Problem

| Problem Description | ? |
|---|---|

① Input

② Output

Case-Based Retrieval Framework                                    104

Knowledge Base                                                        106

Case-Based Recommender System (Kowledge-Base System)          102

**Fig. 1**

**Fig. 2**

EP 2 535 852 A1

102

**Case-Based Recommender System**

Case-Based     104
Retrieval Framework

Case Representation
(Meta-Model)    302

Case Retrieval
Algorithm
(Similarity Assessment)

304

Application
Extensibility
Models

Service
Models

Adaptation
Pattern
Library
— 106

Similarity
Measures

Case Base

Rule Base
(adaptation
phase)

306 — Adaptation
Framework

Retention/Revision
Framework

Knowledge
Base

**Fig. 3**

EP 2 535 852 A1

**402**

Integration Case

| Integration Problem | 406 |

| Integration Solution | 408 |

**410**

Integration Case

Problem Description    412

Integration Goal Description

Integration Context Description

Integration Requirements Description

UI Extension Requirements

Process Extension Requirements

Business Logic Extension Requirements

Technical Integration Requirements

Non-Functional Requirements

Problem Solution    414

Integration Model
(Instantiated Adaption Patterns)

Adapted/Extended Core Models

Service Model

**Fig. 4**

EP 2 535 852 A1

Integration Problem
(Query Case)

Integration Case
(Existing Case)

502

504

Problem description

Problem description

iq1 ← W1 → ic1

iq2 ← W2 → ic2

iq3 ← W3 → ic3

... ... ...

iqn ← Wn → icn

?

Integration Solution

**Fig. 5**

| Integration Problem (Query Case) | Integration Case |
|---|---|
| **Problem Description** | **Problem Description** |
| Integration Goal Description | Integration Goal Description |
| Integration Context Description | Integration Context Description |
| **Integration Requirements Description** | **Integration Requirements Description** |
| UI Extension Requirements | UI Extension Requirements |
| Process Extension Requirements | Process Extension Requirements |
| Business Logic Extension Requirements | Business Logic Extension Requirements |
| Technical Integration Requirements | Technical Integration Requirements |
| Non-Functional Requirements | Non-Functional Requirements |
| ? | Problem Solution |

**sim**goal

**Fig. 6a**

| Integration Problem (Query Case) | Integration Case |
|---|---|
| **Problem Description** | **Problem Description** |
| Integration Goal Description | Integration Goal Description |
| Integration Context Description | Integration Context Description |
| Integration Requirements Description | Integration Requirements Description |
| UI Extension Requirements | UI Extension Requirements |
| Process Extension Requirements | Process Extension Requirements |
| Business Logic Extension Requirements | Business Logic Extension Requirements |
| Technical Integration Requirements | Technical Integration Requirements |
| Non-Functional Requirements | Non-Functional Requirements |
| ? | Problem Solution |

**sim**ctx

**Fig. 6b**

EP 2 535 852 A1

| Integration Problem (Query Case) | Integration Case |
|---|---|
| **Problem Description** | **Problem Description** |
| Integration Goal Description | Integration Goal Description |
| Integration Context Description | Integration Context Description |
| **Integration Requirements Description**<br><br>UI Extension Requirements<br><br>Process Extension Requirements<br><br>Business Logic Extension Requirements<br><br>Technical Integration Requirements<br><br>Non-Functional Requirements | **Integration Requirements Description**<br><br>UI Extension Requirements<br><br>Process Extension Requirements<br><br>Business Logic Extension Requirements<br><br>Technical Integration Requirements<br><br>Non-Functional Requirements |
| ? | Problem Solution |

**sim**reqs

**Fig. 6c**

| Integration Problem (Query) | Integration Case |
|---|---|
| **Problem Description** | **Problem Description** |
| Integration Goal Description | Integration Goal Description |
| Integration Context Description | Integration Context Description |
| **Integration Requirements Description** | **Integration Requirements Description** |
| UI Extension Requirements | UI Extension Requirements |
| Process Extension Requirements | Process Extension Requirements |
| Business Logic Extension Requirements | Business Logic Extension Requirements |
| Technical Integration Requirements | Technical Integration Requirements |
| Non-Functional Requirements | Non-Functional Requirements |
| ? | Problem Solution |

**sim**com

**Fig. 6d**

700

702 Receive the integration goal definition

704 Receive the integration context definition

706 Receive the integration requirements definition

707 Receive a configuration of similarity measures

710 Retrieve integration cases that are similar to the integration problem

712 Receive a selection of an integration case from a service integrator

**Fig. 7**

# FIG 8a

| FIG 8a1 | FIG 8a2 |
|---------|---------|

# FIG 8a1

O SAP SIF Recommender System ✖

| 1 | 2 | 3 | 4 |
|---|---|---|---|
| Define Integration Goal | Define Integration Context | Define Integration Requirements | Retrieve Integration Cases |

| Integration Goal | Integration Context | Integration Requirements | Integration Case Retrieval |
|---|---|---|---|

**Question**

What type of enterprise system should be extended/adapted?

What enterprise system flexibility use case should be implemented?

Select the principle integration the integration flavour of the service:

| Save Integration Case | Reset Default Settings |
|---|---|

# FIG 8a2

| 5 | 6 | 7 | O | SAP |
|---|---|---|---|---|
| Adapt Integration Model | Revise Integration Model | Retain Integration Model | | SAP RESEARCH |

| Integration Case Adaptation | Integration Case Revision | Integration Case Retention | Configuration |
|---|---|---|---|

**Value**

| SAP ERP (Enterprise Resource Planning) | ▽ |
|---|---|

| Third Party Service Integration | ▽ |
|---|---|

| Process Integration - extension of single process component | ▽ |
|---|---|

FIG 8b

| | |
|---|---|
| FIG 8b1 | FIG 8b2 |

# FIG 8b1

O SAP SIF Recommender System ✕

| 1 | 2 | 3 | 4 |
|---|---|---|---|
| Define Integration Goal | Define Integration Context | Define Integration Requirements | Retrieve Integration Cases |

| Integration Goal | Integration Context | Integration Requirements | Integration Case Retrieval |
|---|---|---|---|

Question

**Context I: Define Service To Be Integrated**

Select the service that should be integrated into the target enterprise system:

Define the functional business semantics of the service:

**Context II: Define Integration Context in Enterprise System**

Select the business area within the enterprise system where the service should be integrated:

Select the UI component(s) that should be extended with the service:

Select the process component(s) that should be extended with the service:

| Save Integration Case | Reset Default Settings |
|---|---|

# FIG 8b2

| 5 | 6 | 7 | ○ | SAP |
|---|---|---|---|---|
| Adapt Integration Model | Revise Integration Model | Retain Integration Model | | SAP RESEARCH |

| Integration Case Adaptation | Integration Case Revision | Integration Case Retention | Configuration |
|---|---|---|---|

**Value**

| Service 3 ▽ | Show Service Description |
|---|---|
| ProductDevelopmentAndManufacturing | Select Business Function |
| EnterpriseResourcePlanning | Select Business Function |
| Not Relevant ▽ | Show Core UI Model |
| Process Component 1 ▽ | Show Core Process Model |

EP 2 535 852 A1

# FIG 8c

| FIG 8c1 | FIG 8c2 |
|---------|---------|

# FIG 8c1

O SAP SIF Recommender System ✖

| 1 | 2 | 3 | 4 |
|---|---|---|---|
| Define Integration Goal | Define Integration Context | Define Integration Requirements | Retrieve Integration Cases |

| Integration Goal | Integration Context | Integration Requirements | Integration Case Retrieval |
|---|---|---|---|

| General Requirements | UI Extension | Process Extension | Business Logic Extension | Technical |

| Data Access Related Requirements | Human Interaction Related Requirements | Application |

**Question**

Should data returned by the service be persisted in the target enterprise system?

Does the integration logic need to read data from the core enterprise system?

Does the integration logic need to write data to the core enterprise system?

Does the integration logic need to access additional application logic of the core enterprise system?

| Save Integration Case | Reset Default Settings |

# FIG 8c2

| 5 | 6 | 7 | ○ | SAP |
| Adapt Integration Model | Revise Integration Model | Retain Integration Model | | SAP RESEARCH |

| Integration Case Adaptation | Integration Case Revision | Integration Case Retention | Configuration |

| Integration Requirements | Non-Functional Integration Requirements |

| Customizing Related Requirements |

**Value**

| Required - data should be persisted in an existing table of the target system | ▽ |
| Not Required | ▽ |
| Required - after service operation is called | ▽ |
| Not Required | ▽ |

## FIG 8d

| FIG 8d1 | FIG 8d2 |
|---------|---------|

## FIG 8d1

○ SAP SIF Recommender System ✕

| ○ [1] | [2] | [3] | [4] |
|---|---|---|---|
| Define Integration Goal | Define Integration Context | Define Integration Requirements | Retrieve Integration Cases |

| Integration Goal | Integration Context | Integration Requirements | Integration Case Retrieval |
|---|---|---|---|

| General Requirements | UI Extension | Process Extension | Busines Logic Extension | Technical |
|---|---|---|---|---|

**Question**

Who iniatites the communication with the process extension?

Where should the extension process be plugged in?

Does the core proccess sent data to the extension?

Does the extension sent data to the core process?

How does the core process and the extension communicate?

Is there more than one core process involved in the communication?

Is there more than one extension involved in the communication?

| Save Integration Case | Reset Default Settings |
|---|---|

# FIG 8d2

| 5 | 6 | 7 | O | SAP/ |
| Adapt Integration Model | Revise Integration Model | Retain Integration Model | | SAP RESEARCH |

| Integration Case Adaptation | Integration Case Revision | Integration Case Retention | Configuration |

| Integration Requirements | Non-Functional Integration Requirements | |

**Value**

| Core Process triggers Extension | ▽ |

| Plugin - Into Core Process | ▽ |

| Yes | ▽ |

| No | ▽ |

| Asynchronous | ▽ |

| No | ▽ |

| No | ▽ |

# FIG 8e

| FIG 8e1 | FIG 8e2 |
|---------|---------|

# FIG 8e1

O SAP SIF Recommender System ✕

| 1 | 2 | 3 | 4 |
|---|---|---|---|
| Define Integration Goal | Define Integration Context | Define Integration Requirements | Retrieve Integration Cases |

| Integration Goal | Integration Context | Integration Requirements | Integration Case Retrieval |
|---|---|---|---|

| Similarity Measures | Adaptation Rules | Recommender Engine | Rule Engine | Knowledge Base |
|---|---|---|---|---|

| Global Similarity Measure Configuration | Local Similarity Measure Configuration |
|---|---|

## Integration Goal Similarity Measure Settings

| Attribute | Similarity Function — 802 |
|---|---|
| Target Business System Type | Equa ▽ |
| Flexibility Usage Scenario | Equa ▽ |
| Integration Flavour | SIFSimTableIntegrationFlavour ▽ |

Integration Context Similarity Measure Settings

General Requirements Similarity Measure Settings

UI Extension Requirements Similarity Measure Settings

Process Extension Requirements Similarity Measure Settings

| Attribute | Similarity Function |
|---|---|
| Trigger of Communication | SIFSimTablePETrigger ▽ |
| Plugin Position of Extension Process | SIFSimTablePEPluginPosition ▽ |

| Save Integration Case | Reset Default Settings |
|---|---|

# FIG 8e2

| 5 | 6 | 7 | ◯ | SAP |
|---|---|---|---|---|
| Adapt Integration Model | Revise Integration Model | Retain Integration Model | | SAP RESEARCH |

| Integration Case Adaptation | Integration Case Revision | Integration Case Retention | Configuration |
|---|---|---|---|

Weight ～804                     Additional Configuration

｜｜｜｜｜｜▢｜｜｜｜｜  5

｜｜｜｜｜▢｜｜｜｜｜  5

｜｜｜｜｜▢｜｜｜｜｜  5          Configure Similarity Matrix

Weight                          Additional Configuration

｜｜｜｜｜▢｜｜｜｜｜  5          Configure Similarity Matrix

｜｜｜｜｜▢｜｜｜｜｜  5          Configure Similarity Matrix

EP 2 535 852 A1

FIG 8f

| FIG 8f1 | FIG 8f2 |

FIG 8f1

O SAP SIF Recommender System ✕

| 1 | 2 | 3 | 4 |
| Define Integration Goal | Define Integration Context | Define Integration Requirements | Retrieve Integration Cases |

| Integration Goal | Integration Context | Integration Requirements | Integration Case Retrieval |

Start: Retrieval of Integration Cases | Adapt Selected Integration Case

Retrieval Results | Advanced View: Detailed Retrieval Results

| Rank | CASE ID | Similarity | Business Area | Integrated Service |
|---|---|---|---|---|
| 1 | Case 3 | 76,79 % | PurchaseOrderProcessing | Service 3 |
| 2 | Case 4 | 66,48 % | Recruiting | Service 4 |
| 3 | Case 2 | 43,96 % | CreditManagement | Service 2 |
| 4 | Case 1 | 29,44 % | AftermarketSalesAndService | Service 1 |
| | | | | |
| | | | | |
| | | | | |
| | | | | |
| | | | | |
| | | | | |
| | | | | |
| | | | | |
| | | | | |
| | | | | |
| | | | | |

◁

Save Integration Case | Reset Default Settings

# FIG 8f2

| 5 | 6 | 7 | ○ | SAP |

Adapt Integration Model — Revise Integration Model — Retain Integration Model — SAP RESEARCH

| Integration Case Adaptation | Integration Case Revision | Integration Case Retention | Configuration |

| Extended UI Models | Extended Process Models | Customiza |
|---|---|---|
| Not Relevant | Process Component 1 | C3-Main0 |
| Not Relevant | Process Component 2 | C4-Main0 |
| UI Component 2 | Not Relevant | C2-Main0 |
| UI Component 1 | Not Relevant | C1-Main0 |
| | | |
| | | |
| | | |
| | | |
| | | |
| | | |
| | | |
| | | |
| | | |
| | | |

▷

# FIG 8h

| | |
|---|---|
| FIG 8h1 | FIG 8h2 |

# FIG 8h1

O SAP SIF Recommender System ✂

O—[1]————————[2]————————[3]————————[4]—

| Define Integration Goal | Define Integration Context | Define Integration Requirements | Retrieve Integration Cases |

| Integration Goal | Integration Context | Integration Requirements | Integration Case Retrieval |

Start Retrieval of Integration Cases | Adapt Selected Integration Case

Retrieval Results | Advanced View: Detailed Retrieval Results

| Attribute | Query |
|---|---|
| Rank | |
| GlobalSimilarity | |
| IntegrationGoalSimilarity | |
| IntegrationContextSimilarity | |
| IntegrationReqSimilarity | |
| TargetBusinessSystemType | SAP ERP (Enterprise Resource Planning) |
| UsageScenario | Third Party Service Integration |
| IntegrationFlavour | Process Integration - extension of single proce... |
| ServiceToBeIntegrated | Service 3 |
| ServiceBusinessSemantics | ProductDevelopmentAndManufacturing |
| TargetEnterpriseSystemFunctionalArea | EnterpriseResourcePlanning |
| TargetUIComponent | Not Relevant |
| TargetProcessComponent | Process Component 1 |
| TextualDescriptionRequirements | |
| ReqUITriggerOfService | |
| ReqUIExtensionServiceInput | |
| ReqUIExtensionServiceOutput | |
| ReqPETriggerOfInteraction | Core Process triggers Extension |
| ReqPEPluginPositionExtensionProcess | Plugin - Into Core Process |
| ReqPEDataFlowCpToEx | Yes |
| ReqPEDataFlowExToCp | No |

◁ |

Save Integration Case | Reset Default Settings

# FIG 8h2

| Adapt Integration Model | Revise Integration Model | Retain Integration Model | |
|---|---|---|---|
| Integration Case Adaptation | Integration Case Revision | Integration Case Retention | Configuration |

| Case 3 | W | LS | Case 4 | |
|---|---|---|---|---|
| 1 | | | 2 | |
| 0.77 | | | 0.66 | |
| 1.00 | 5.00 | | 1.00 | |
| 0.77 | 5.00 | | 0.37 | |
| 0.53 | 5.00 | | 0.62 | |
| SAP ERP (Enterprise Resource Planning) | 5.00 | 1.00 | SAP ERP (Enterprise Resource P | |
| Third Party Service Integration | 5.00 | 1.00 | Third Party Service Integration | |
| Process Integration - extension of single proce. | 5.00 | 1.00 | Process Integration - extensiond | |
| Service 3 | 5.00 | 1.00 | Service 4 | |
| ProcurementAndLogisticsExecution | 5.00 | 0.67 | HumanCapitalManagement | |
| PurchaseOrderProcessing | 5.00 | 0.20 | Recruiting | |
| Not Relevant | 5.00 | 1.00 | Not Relevant | |
| Process Component 1 | 5.00 | 1.00 | Process Component 2 | |
| Simple Process Integration scenario without pe | 5.00 | 0.00 | Simple Process Integration scen | |
| No trigger required | 5.00 | 0.00 | No trigger required | |
| Not Required | 5.00 | 0.00 | Not Required | |
| Not Required | 5.00 | 0.00 | Not Required | |
| Core Process triggers Extension | 5.00 | 1.00 | Core Process triggers Extension | |
| Plugin - Into Core Process | 5.00 | 1.00 | Plugin - After Core Process | |
| Yes | 5.00 | 1.00 | Yes | |
| Yes | 5.00 | 0.00 | No | |

**Enterprise System**

900

**Presentation Layer** 902

**Business Process Layer** 904

**Service Layer** 906

**Bus. Config. Layer** 908

916

**Business Application**

910 · 910 · 910

UI View · UI View · UI View

914

Business Process

A1 · A2 · A3 · A4 · A5 · A6

912 · 912 · 912 · 912 · 912 · 912

Service · Service · Service

Business Configuration

**Extensibilty / Adaptability Features**

Presentation Layer Extensibility/ Adaptability

Business Process Layer Extensibility/ Adaptability

Service Layer Extensibility/ Adaptability

Bus. Config. Layer Extensibility/ Adaptability

⬭ User Interface View — ▭ Process Activity — ⬭ Service

--→ User Interface View Assignment — → Process Control Flow — → Service Assignment

**Fig. 9**

EP 2 535 852 A1

**THESEUS** T E X O

Design Manager Cockpit

| Product | Documentation | Collaboration | Requirements | Analytics |

**Components**

- ▷ headrest
- ▷ backrest
- ▷ seat base

**Product Description**

New changes and Requirements weight: The right seats weight does not exceed 34 kg, this includes the seats structure/Requirements costs:

**Product History**

Solved quality issue: 10.05.2007

**Product Visualization**

Productld: DMR2007

Volume: 0,750 M3

Net Weight: 20,5 Kg

Gross Weight: 24,3 Kg

Entire Eco Value: 381

③

1008

**Product Components** — 1004

| Description | Value | EcoValue |
|-------------|-------|----------|
| Auto | 400 | 190 |
| Karrosserie | 100 | 48 |
| Reifen | 150 | 71 |
| Sitze | 50 | 24 |
| Motor | 100 | 48 |

① 1002

**Task Details**

Eco-directive compliance

| Search Service |

Eco Value Calculated

② 1006

FIG. 10

EP 2 535 852 A1

## 1100

1132 — Server

1131 — Server

1133 — Server

Internet — 1130

1115 — Client

1120 — Local Network

1134 — Server

1135 — Server

Display 1112

Memory 1102

Network Interface 1104

1105

Input Device 1111

Processor 1101

Storage Device 1103

1110

**FIG. 11**

EP 2 535 852 A1

Europäisches
Patentamt

European
Patent Office

Office européen
des brevets

# EUROPEAN SEARCH REPORT

**Application Number**

EP 12 00 4414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)<br><br>----- | | INV.<br>G06Q10/00 |

**TECHNICAL FIELDS SEARCHED (IPC)**

G06Q

The present search report has been drawn up for all claims

| Place of search | Date of completion of the search | Examiner |
|---|---|---|
| Munich | 27 September 2012 | Anastasov, Yuliyan |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)